# EUROPEAN PATENT SPECIFICATION

(11) **EP 3 123 692 B1**
(45) Date of publication and mention of the grant of the patent: **27.12.2017**
(21) Application number: 15715050.9
(22) Date of filing: 23.03.2015
(51) Int. Cl.: H04L 29/06, H04L 9/08, H04L 9/32, H04W 12/04

(54) **TECHNIQUES TO OPERATE A SERVICE WITH MACHINE GENERATED AUTHENTICATION TOKENS**
VERFAHREN ZUM BETRIEB EINES DIENSTES MIT MASCHINENERZEUGTEN AUTHENTIFIZIERUNGSTOKEN
TECHNIQUES D'EXPLOITATION D'UN SERVICE AVEC DES JETONS D'AUTHENTIFICATION PRODUITS PAR MACHINE

(30) Priority: 27.03.2014 US 201414227419
(43) Date of publication of application: 01.02.2017
(73) Proprietor: Microsoft Technology Licensing, LLC, Redmond, WA 98052-6399 (US)
(72) Inventor: SCHOEN, Luke, Redmond, Washington 98052-6399 (US); KUMAR, Santosh, Redmond, Washington 98052-6399 (US); DANI, Rajalakshmi, Redmond, Washington 98052-6399 (US); MATHUR, Siddhartha, Redmond, Washington 98052-6399 (US); BRADY, Shane, Redmond, Washington 98052-6399 (US); ARIMILLI, Ramesh, Redmond, Washington 98052-6399 (US); HETHERINGTON, David, Redmond, Washington 98052-6399 (US); AHUJA, Vikas, Redmond, Washington 98052-6399 (US)
(74) Representative: Grünecker Patent- und Rechtsanwälte PartG mbB
(86) International application number: PCT/US2015/021919
(87) International publication number: WO 2015/148331

(56) References cited:
- US-A- 6 144 959
- US-A1- 2013 298 215
- US-A1- 2013 318 592

## Description

### BACKGROUND

With various high paced development methodologies available today for designing computing and communications systems, numerous users may need access to servers hosting one or more services of the systems for purposes of testing, upgrading, debugging, developing, deploying, and/or maintaining these servers. However, the increase in users may also come with an increase in user accounts, access levels and associated security risks. Document US 2013/318592 discloses a system and method for accessing account information, wherein a client first logs in providing credentials for validation. Then, an account management system automatically creates a new authentication token to be used to authenticate the client device in subsequent interactions with the same server. In particular, a new authentication token is generated and sent to the client device every time the client requests account information. These tokens are used only once to interact with an account management system and are disregarded afterwards.

### SUMMARY

The invention is defined in the independent claims.

Particular embodiments are set out in the dependent claims.

### BRIEF DESCRIPTION OF THE DRAWINGS

**FIG. 1** illustrates an example of an authentication token management system for service accounts.
**FIG. 2** illustrates an example of a user interface view of the authentication token management system for managing authentication tokens of service accounts.
**FIG. 3A** illustrates an example of a logic flow for the authentication token management application receiving a request for service accounts associated with a client.
**FIG. 3B** illustrates an example of a logic flow for the authentication token management application receiving a request to generate an authentication token for a service account.
**FIG. 3C** illustrates an example of a logic flow for the token management proxy application.
**FIG. 3D** illustrates an example of a logic flow for a client device requesting associated service accounts and requesting the generation of authentication tokens for the associated service accounts.
**FIG. 4** illustrates an example of a computing architecture.

### DETAILED DESCRIPTION

Various embodiments are generally directed to an authentication token management system to provide management of authentication tokens for one or more accounts. By utilizing the authentication token management system to generate authentication tokens (e.g., passwords, passcodes, passphrases, Personal Identification Numbers (PIN), cryptographic tokens, etc.) to replace all human created authentication tokens for some or all accounts of an electronic system, the security and privacy of the electronic system may be substantially improved. To achieve these and other improvements, the authentication token management system may generally be arranged to authenticate clients (e.g., users, engineers, contractors, customers, and/or software/hardware components) based on multifactor authentication protocols (e.g., two factor authentication using smart cards and associated PINs) using for example a federated identity application (e.g., MICROSOFT® Active Directory Federation Services (AD FS)) or any other internet information services (IIS) authentication provider to validate the authentication of a client based on multifactor authentication protocols.

With various high paced development methodologies available today for designing Software as a Service (SaaS) systems, numerous users (e.g., testers, engineers, contractors, internal customers, and/or external customers) may need access to servers hosting one or more services of the SaaS systems for the purposes of testing, upgrading, debugging, developing, deploying, and/or maintaining these servers on a daily basis. With numerous users requiring access to the servers, each user may be granted one or more user accounts to access these servers. However, as the SaaS systems increase, so do the number of user accounts and the associated security risk. This is because each additional user account may expose a potential entry point for attackers and consequently, increase the attack surface or vector for the attackers to gain unauthorized access. These potential entry points become particularly problematic when some user accounts may have elevated privileges (e.g., administrative privileges) in order to perform their day-to-day tasks. While various authentication methods are available today to ensure that these accounts are not easily compromised by an attacker, the use of human created passwords have been a consistent weakness especially when the human created passwords tend to be short, simple, and often reused across multiple accounts. These factors in combination with numerous accounts available in the SaaS systems create a substantial risk and probability that an attacker may gain unauthorized access by, for example, compromising the human password associated with one or more accounts of the SaaS systems. Such unauthorized access by attackers may cause considerable harm to a business and raise serious security and privacy concerns for customers.

In various embodiments, to enable clients (e.g., users, engineers, contractors, customers, and/or software/hardware components) to retrieve one or more service accounts associated with their client accounts, the authentication token management system may be generally arranged to receive one or more client requests for a collection of service accounts and provide the collection of service accounts and the service account information (e.g., service account identifier, service account role(s), service account scope, service account lifetime, service account status, etc.) associated with the service accounts, in response to the one or more clients requests. Once the request for the collection of service accounts has been received, the authentication token management system may be further arranged to authenticate the one or more received requests. After the request has been validated, the authentication token management system may be arranged to retrieve or fetch, via a proxy application which may expose a public endpoint in a datacenter, the one or more service accounts based at least partially on the proxy authentication information (e.g., a digital fingerprint or thumbprint of a shared secret digital certificate) and provide the client device with the retrieved one or more service accounts.

To enable the clients to generate an authentication token for the one or more service accounts in a secure manner, the authentication token management system may be generally arranged to receive one or more requests via various network interconnects over a secure connection (e.g., a trusted and encrypted connection utilizing Hypertext Transfer Protocol Secure (HTTPS)) to generate authentication tokens for service accounts. Once the requests to generate one or more authentication tokens have been received, the authentication token management system may be further arranged to validate the received one or more requests. After the requests have been validated, the authentication token management system may be arranged to generate the authentication tokens for the one or more service accounts based at least partially on the client authentication information.

To generate the authentication tokens in a secure manner, the authentication token management system may be generally arranged to generate the authentications tokens by a server device of the authentication token management system utilizing one or more secure hardware and/or software components (e.g., a Trusted Platform Module (TPM), System.Web.Security.Membership of the MICROSOFT .NET Framework Library, etc.). Once the authentication tokens are generated by the server device, the server device of the authentication token management system may be further arranged to request to update or set the authentication token for a service account, via a proxy application, based at least partially on the proxy authentication information (e.g., a shared secret digital certificate between an authentication token management application and the token management proxy application and a digital fingerprint or thumbprint of the shared secret digital certificate). The proxy application may be arranged to request and/or communicate with a directory service server device managing the service account to update or set the existing authentication token with the generated authentication token.

To further secure the one or more service accounts, the authentication token management system may be generally arranged to configure the generated authentication tokens to be immutable so that a client may not modify or update the authentication token (e.g., modify or update the authentication token to a weaker authentication token) once the authentication token has been generated for a service account. Furthermore, the authentication token management system may further arranged to generate authentication tokens that are unique so that no two service accounts in the SaaS systems may have the same authentication token. In embodiments where the authentication tokens comprise passwords, pass phrases, pass codes, PIN and the like, the authentication token management system may be arranged to generate the authentication token comprising a randomly generated sequence of alphanumeric characters and/or symbols. The generated sequence of alphanumeric characters and/or symbols may vary in complexity based at least partially on a length parameter (e.g., 25-30 characters and/or symbols) and/or a character class/symbol parameter (e.g., at least 20 alphanumeric characters and at least five symbols).

Once the authentication token has been generated, the authentication token management system may be generally arranged to set or update, via the proxy application, the generated authentication token for a service account based at least partially on the proxy authentication information. In some embodiments, the authentication token management system, may be further restricted so that a client may be restricted to perform only a limited set of actions (e.g., retrieve service accounts associated with the proxy authentication information and update or set the password for a service account) and only perform those limited set of actions with respect to their own service accounts. Additionally, the authentication token management system may be further arranged to provide the generated authentication token to client devices for programmatic access (e.g., copy), secure storage, and/or display via the various network interconnects over secure connections.

In embodiments where the service account may be optionally associated with a limited lifetime, limited role, and/or limited scope (e.g., a just-in-time provisioned account or JIT account), authentication token may live or persist for the lifetime (e.g., 4 hours for a maximum of 96 hours) of the service account. Moreover, the end of the lifetime for a service account, the authentication token management system may be arranged to reset the authentication token associated with the service account so that any active tokens (e.g., access tokens) associated with the service account may expire.

As a result, the ability of an attacker to compromise one or more service accounts using authentication token based attacks may be substantially reduced by enabling clients to securely request and generate new authentication tokens associated with one or more service accounts. Additionally, because the generated authentication tokens may be substantially more complex compared to the human created passwords, traditional brute force and even some social engineering based attacks may be mitigated by the use of complex authentication tokens as these tokens may be difficult or even impossible to communicate accurately via ordinary means and/or mediums (e.g., verbal communication). Furthermore, by replacing all human created passwords with machine generated authentication tokens that are random and/or unique for each service account, the attacker's ability to compromise the one or more service accounts by, for example, using a shared authentication token may be further mitigated. In embodiments where one or more service accounts may be further associated with a limited lifetime, the attacker's access using a compromised service account will be further limited because these service accounts may have a limited lifetime before they are disabled. In this manner, the security and privacy of the SaaS systems may be greatly improved.

With general reference to notations and nomenclature used herein, the detailed descriptions which follow may be presented in terms of program procedures executed on a computer or network of computers. These procedural descriptions and representations are used by those skilled in the art to most effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in most cases, in any of the operations described herein which form part of one or more embodiments. Rather, the operations are machine operations. Useful machines for performing operations of various embodiments include general purpose digital computers or similar devices.

Various embodiments also relate to apparatus or systems for performing these operations. This apparatus may be specially constructed for the needed purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove convenient to construct more specialized apparatus to perform the needed method steps. The needed structure for a variety of these machines will appear from the description given.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives consistent with the claimed subject matter.

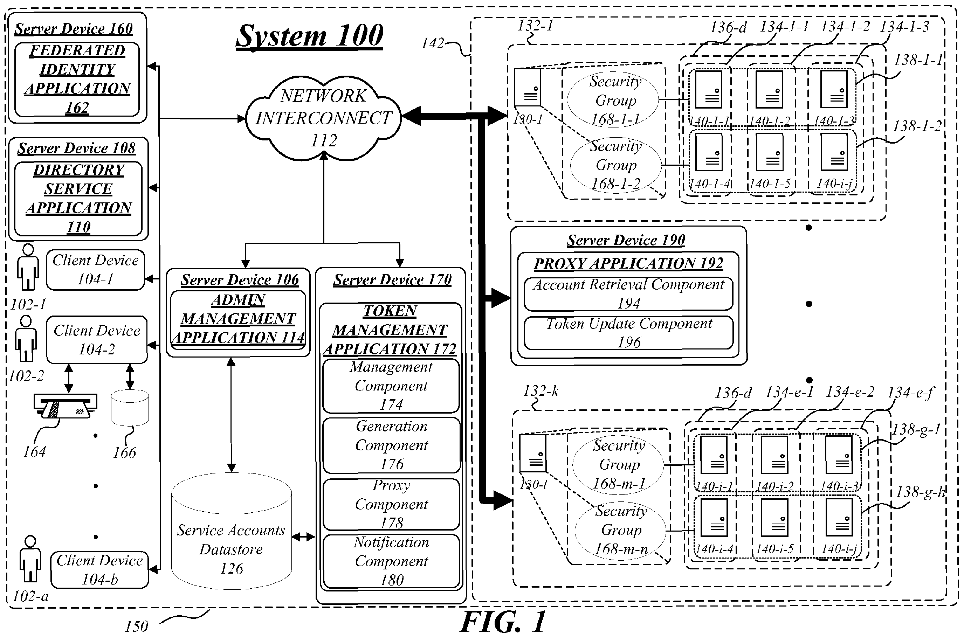

**FIG. 1** illustrates an embodiment of the authentication token management system 100. In various embodiments, the authentication token management system 100 may be implemented in or with an enterprise computing environment 150 (e.g., cloud storage systems, data centers, etc.) comprising one or more clients 102-*a* (e.g., users, engineers, contractors, customers, and/or software/hardware components) where each client (e.g., client 102-1 or 102-2) may be associated with one or more client accounts and each client account of the one or more client accounts may be further associated with client account information. The client account information may include, but is limited to, client account authentication information (e.g., user-principal-name (UPN), account identifier, account password or hashed and/or salted derivatives thereof, account domain, smart card certificates and the associated PINs, biometrics, etc.), client account authorization information (e.g., client account role and scope information, access permissions, associated groups, etc.), and/or any other information relevant to the authentication and authorization of the one or more clients 102-*a*.

The one or more clients 102-*a* may utilize the one or more client accounts to request for their associated service accounts and utilize one or more resources and/or assets such as, for example, in datacenter 142 comprising one or more server devices 140-*i-j* arranged to provide one or more services of one or more electronic systems. In one embodiment, the electronic system may comprise a SaaS system, which may include without limitation MICROSOFT Office 365, MICROSOFT Exchange Online MICROSOFT SharePoint Online, MICROSOFT Dynamics CRM, and other SaaS systems. Embodiments are not necessarily limited to a type of electronic system.

The server devices 140-*i*-*j* in the datacenter 142 may be further interconnected between and among each other via network interconnect 112 in order to provide the various services hosted by the SaaS systems. It may be appreciated that server devices 140-*i*-*j* in various embodiments are merely referenced for purposes of illustration and not limitation. As such, any or all of the server devices 140-*i*-*j* in various embodiments may be replaced with any other resources and/or assets such as, for example, virtual devices, work stations, computing devices, mobile devices, applications, services, and/or other software/hardware components.

It is also worthy to note that "*a*" and "*b*" and "*c*" and similar designators as used herein are intended to be variables representing any positive integer. Thus, for example, if an implementation sets a value for *a* = 2, then a complete set of clients 102-*a* may include clients 102-1 and 102-2. In an another example, if an implementation sets values for *i* = 1 and *j* = 6, then a complete set of server devices 140-*i*-*j* may include server devices 140-1-1, 140-1-2, 140-1-3, 140-1-4, 140-1-5, and 140-1-6. The embodiments are not limited in this context.

In various embodiments, the authentication token management system 100 may comprise one or more client devices 104-b (e.g., laptops, computers, phones, work stations, or any other computing devices) used by the clients 102-*a* for accessing or servicing the server devices 140-*i*-*j* of one or more SaaS systems (e.g., testing, upgrading, debugging, developing, deploying, using, and/or maintaining the one or more resources and/or assets of the SaaS Systems) via the network interconnect 112. The network interconnect 112 may be generally arranged to provide network connectivity between and among a variety devices, components, applications, servers, resources, and/or assets in the enterprise computing environment 150 over one or more networks (e.g., intranet and/or internet) utilizing one or more network devices (e.g., repeaters, bridges, hubs, switches, routers, gateways, load balancers, etc.).

In various embodiments, at least some of the client devices 104-b, such as, for example, client device 104-2 may be communicatively coupled to an identity input and/or output (I/O) device 164 (e.g., a smart card reader) for communicating with a physical identity token (e.g., a smart card) in order to read and authenticate or assist in the authentication of the client authentication information (e.g., a digital smart card certificate) contained in the physical identity token associated with a client. Additionally or alternatively, other client devices 104-*b*, such as, for example, client device 104-1 may be communicatively coupled to a cryptographic module (e.g., a TPM (not shown)) configured to read and authenticate or assist in the authentication of virtual identity tokens associated with a client.

Additionally or alternatively, at least some of the client devices 104-*b*, such as, for example, client device 104-2 may also be communicatively coupled to an authentication token datastore 166 (e.g., Password Safe) for securely storing at least the service account identifiers and their associated authentication tokens in an encrypted format utilizing one or more encryption algorithms (e.g., Twofish symmetric key block cipher). Thus, in various embodiments, the client device 104-2 may be configured to automatically encrypt and store any authentication tokens provided to the client 102-2 in the authentication token datastore 166 which may enable the client 102-2 to later retrieve, via client device 104-2, the previously stored service account identifiers and their associated authentication tokens for accessing one or more resources and/or assets in the datacenter 142.

In various embodiments, the authentication token management system 100 and in particular, datacenter 142, may comprise or be integrated with one or more directory service server devices 130-*l* which may be generally arranged to execute, among other applications, directory service application (not shown) in order to organize the datacenter 142 comprising the one or more server devices 140-*i-j* into a hierarchy of one or more logical groups, logical subgroups, and/or logical sub subgroups (e.g., forests 132-*k*, domains 136-*d*, and/or organizational units 134-*e*-*f*). The directory service server devices 130-*l* may also be arranged to store the hierarchy in one or more directory service datastores (not shown) comprising directory service information.

The one or more directory service server devices 130-*l* may comprise service account information associated with one or more service accounts so that the one or more directory service server devices 130-*l* may authenticate access requests from one or more clients 102-*a* using service accounts to access the one or more resources and/or assets. The service account information may include, but is limited to, service account authentication information (e.g., user-principal-name (UPN), account identifier, account authentication token, account domain, smart card certificates, biometrics, etc.), service account authorization information (e.g., service account role and scope information, service account access permissions, service account associated groups, etc.), service account lifetime information (e.g., lifetime of a service account), directory service information (e.g., a directory service server device associated with a service account), and/or any other information relevant to the authentication, authorization, and lifetime of the one or more service accounts.

In various embodiments, each directory service server device (e.g., directory service server device 130-1) may comprise or implement a directory service application (not shown). Exemplary directory service applications may include, but are not limited to, MICROSOFT Active Directory, NOVELL® eDirectory, APPLE® Open Directory, ORACLE® Internet Directory (OID), IBM® Tivoli Directory Server, or any other application that implements the Directory Access Protocol (DAP), Lightweight Directory Access Protocol (LDAP), and/or X.500 standards promulgated by the International Telecommunication Union (ITU) Telecommunication Standardization Sector (ITU-T).

By way of illustration, the directory service server device 130-1 may comprise or implement at least a portion of MICROSOFT Active Directory (e.g., Active Directory Domain Services, Active Directory Domain Controllers, Active Directory Datastores, etc.). Each directory service server device (e.g., directory service server device 130-1) of the one or more directory service server devices 130-*l* may be arranged to manage a top level logical group such as, for example, forest 132-1. The one or more forests 132-*k* may comprise one or more lower logical groups, e.g., logical subgroups, such as, for example, domains 136-*d*. Each domain (e.g., domain 136-1) of the one or more domains 136-*d* may be arranged to manage lower level logical groups, e.g., logical sub subgroups, such as, for example, organizational units 134-*e*-*f*. Optionally, the domains 136-*d* may be further logically grouped into one or more intermediate logical groups between the forests 132-*k* and domains 136-*d*, such as, for example, trees (not shown). Each organizational unit (e.g., organizational unit 134-1-1) of the one or more organizational units 134-*e*-*f* may comprise one or more resources and/or assets, such as, for example, server devices 140-*g-h.*

It may be appreciated that the forests 132-*k*, domains 136-*d*, and/or organizational units 134-*e*-*f* in various embodiments are merely referenced for purposes of illustration and not limitation. As such, any or all of the forests 132-*k*, domains 136-*d*, and/or organizational units 134-*e*-*f* in various embodiments may be replaced with their substantial equivalents for a given implementation. For example, in one implementation where the directory service server device 130-1 may comprise or implement at least a portion of NOVELL eDirectory, the forests 132-*k*, domains 136-*d*, and organizational units 134-*e*-*f* may be replaced with trees, partitions, and organizational units as implemented in NOVELL eDirectory, respectively. The embodiments are not limited in this context.

In some embodiments, each domain (e.g., domain 136-1) in the datacenter 142 may optionally comprise one or more breach boundaries 138-*g*-*h*, in order to contain the lateral movement of one or more attackers that may have compromised one or more service accounts. For example, domain 136-1 may comprise breach boundaries 138-1-1 and 138-1-2. Additionally, in some implementations of these embodiments, the breach boundaries 138-*g*-*h* may be independent of the one or more organizational units 134-*e*-*f*. For example, in domain 136-1, organizational units 134-1-1, 134-1-2, 134-1-3 may span across breach boundaries 138-1-1 and 138-1-2, so that a single breach boundary, such as breach boundary 138-1-1 may include resources and/or assets, such as, for example, server devices 140-1-1, 140-1-2, 140-1-3, from all three organizational units 134-1-1, 134-1-2, 134-1-3. In other domains, breach boundaries 138-*g*-*h*, may co-exist with one or more organizational units 134-*e*-*f*, so that a single breach boundary may include resources and/or assets, from a single organizational unit 134-*e*-*f*. The embodiments are not limited in this context.

In some embodiments, the one or more breach boundaries 138-*g*-*h* may be optionally managed by one or more directory service server devices 130-*l* and arranged to grant or provide a set of access permissions for one or more service accounts that may be associated with the security boundary (e.g., a breach boundary of the one or more breach boundaries 138-*g*-*h*) so that the one or more service accounts may access the one or more resources and/or assets within the security boundary. To ensure that an attacker having access to a service account cannot move between and among the one or more breach boundaries 138-*g*-*h* utilizing a "pass the hash attack" (i.e., the lateral movement of an attacker), each breach boundary (e.g., breach boundaries 138-1-1 and 138-1-2) of the one or more breach boundaries 138-*g*-*h* may be further optionally arranged to include a mutually exclusive or non-overlapping set of resources and/or assets so that there is no overlap between any breach boundaries *138-g-h.*

In one exemplary implementation of the one or more breach boundaries 138-*g-h,* the directory service applications (not shown) of the one or more directory service server devices 130-*l* may be arranged to manage and/or assign each breach boundary security group of the one or more breach boundary security groups 168-*m*-*n* a set of access permissions to one or more resources and/or assets, so that any member (e.g., one or more service accounts) added to a breach boundary security group may access the one or more resources and/or assets managed by that security group in accordance with the set of access permissions. To contain the lateral movement of an attacker having gained access to a compromised service account, the one or more directory service server devices 130-*l* may be further arranged to manage the one or more resources and/or assets in one or more mutually exclusive or non-overlapping breach boundary security groups 168-*m*-*n* so that no single resource and/or asset is accessible or serviceable from service accounts being members of two different breach boundary security groups.

It may be appreciated that while only a limited number of breach boundary security groups (e.g., breach boundary security groups 168-1-1, 168-1-2, and 168-*m*-1) are illustrated in various embodiments, the one or more directory service server devices 130-*l* may be configured to manage a plurality of groups (e.g., remote access group, debugger group, etc.) for one or more roles associated with a service account, where each group may be associated with set of access permissions (e.g., remote access to the one or more resources and/or assets, debugging of the one or more resources and/or assets, etc.) associated with the roles, so that the service account may be a member of multiple groups in a nested manner to achieve Role Based Access Control (RBAC). The embodiments are not limited in this context

In various embodiments, the authentication token management system 100 may further comprise server device 108 which may be generally arranged to execute, among other applications, directory service application 110. The directory service application 110 may generally be arranged store and provide client account information associated with the one or more client accounts of clients 102-*a*. The directory service application 110 may also be arranged to store organizational hierarchy information comprising hierarchical structure of an organization that the one or more clients 102-*a* may be a member or affiliate of (e.g., a corporation). The directory service application 110 may be further arranged to authenticate or assist in the authentication of one or more clients 102-*a* requesting authentication tokens for one or more service accounts via the authentication token management application 172. Exemplary directory service applications or implementations may include, but are not limited to, those previously discussed with respect to directory service server devices 130-/.

To authenticate or facilitate the authentication of one or more clients 102-*a* requesting authentication tokens for one or more service accounts, the directory service application 110 may also expose and/or implement one or more application program interfaces (APIs). The admin management application 114 and/or the token management application 172 may utilize the one or more APIs to authenticate the one or more clients 102-*a* requesting service accounts and/or authentication tokens for the service accounts based on the client account information (e.g., client account identifier or client account UPN, and client account password) associated with the one or more clients 102-*a*.

By way of illustration, the admin management application 114 and/or the authentication token management application 172 may authenticate the one or more clients 102-*a* based on the received client account identifier or client account UPN, and client account password by utilizing via network interconnect 112, one or more APIs, and/or one or more local procedural call (LPC) and/or remote procedural call (RPC) mechanisms of the directory service application 110. It may be appreciated that exemplary APIs may include, but are not limited to, Directory Access Protocol (DAP) API, Lightweight Directory Access Protocol (LDAP) API, MICROSOFT Active Directory Service Interfaces (ADSI) API, MICROSOFT Messaging API (MAPI), MICROSOFT Directory System Agent (DSA) API, and/or any other API that enables authentication of clients 102-*a.*

Additionally or alternatively, the authentication token management system 100 may comprise server device 160, which may be generally arranged to execute, among other applications, the federated identity application 162. The federated identity application 162, may be generally arranged to provide multifactor authentication (e.g., two factor authentication utilizing a smart card, a password/pin, and/or hand fingerprint) utilizing one or more authentication protocols (e.g., Kerberos protocol). Authentication factors may include, but are not limited to, a knowledge factor, i.e., something that a client knows (e.g., passwords, passcodes, passphrases, PINs, etc.), a possession factor, i.e., something that a client has (a smart card, a virtual smart card, a security token, etc.), inherent characteristic factor, i.e., something that a client is (e.g., hand fingerprints, iris patterns, retina patterns, biometrics, etc.), and/or any other factor that may be utilized to assist in the identification and/or authentication of a client. Accordingly, in some embodiments, the federated identity application 162 may, in conjunction with an identity input and/or output (I/O) device 164 and/or directory service application 110, be arranged to provide authentication of one or more clients 102-*a*.

In various embodiments, the federated identity application 162 may be further arranged to provide security token service (STS) and issue one or more security tokens (e.g., a Security Assertion Markup Language (SAML) token) to one or more clients 102-*a* and/or claims enabled applications so that the one or more claims enabled applications may identify and/or establish a trusted connection with a client without directly having to receive and/or process the client account information (e.g., user-principal-name (UPN), account identifier, account password or hash derivatives thereof, account domain, smart card certificates, etc.) associated with the one or more clients 102-*a*. Exemplary federated identity applications may include, but are not limited to, MICROSOFT Active Directory Federation Services (AD FS), MICROSOFT Federation Gateway, or any other federated identity service providers configured to issue security tokens comprising claims that assert the identity of a previously authenticated client.

In various embodiments, instead of directly authenticating one or more clients 102-*a* based on the client account identifiers or client account UPNs, and client account passwords, the admin management application 114 and/or the token management application 172 may be arranged as claims enabled applications and as such, configured to receive security tokens issued by federated identity application 162 from one or more client devices 104-*b*, in order to authenticate and/or authorize one or more clients 102-*a*. As such, the admin management application 114 and/or the authentication token management application 172 may authenticate and identify the clients 102-*a* requesting access to the applications based at least partially on the received security tokens. The received security tokens may also comprise one or more claims, which may comprise the client account information associated with one or more clients 102-*a*. Optionally, the received security tokens may further comprise authentication type information indicating the authentication factors, mechanisms, and/or methods (e.g., a smart card and PIN, account identifier and account password, account identifier and biometric fingerprint, etc.) used to authenticate the one or more clients 102-*a*.

By way of illustration, a client 102-2 may first request to authenticate to the client device 104-2 using two factor authentication by interfacing with the identity I/O device 164 using the identity token (i.e., the possession factor) and inputting the associated PIN (i.e., the knowledge factor) via a standard input device (e.g., a keyboard) communicatively coupled to the client device 104-2. The directory service application 110 (e.g., MICROSOFT Active Directory Directory Services (AD DS)) may then receive a request from client device 104-2 to negotiate for a Ticket Granting Ticket (e.g., a Kerberos ticket) for client 102-2 based at least partially on the identity token (e.g., a smart card associated with client 102-2) authenticated and/or validated by the client device 104-2. Once the client 102-2 has been authenticated, the directory service application 110 may then provide a TGT to the client device 104-2. Optionally, the directory service application 110 may additionally include information (e.g., a security identifier (SID) to identify a security group which may include one or more clients 102-*a* that have been authenticated with a smart card and the associated PIN) in the TGT that indicates the client 102-2 has been authenticated using the identity token and the associated PIN rather than traditional client account identifier or client account UPN, and associated client account password.

Continuing with the above illustration, a claims enabled application (e.g., admin management application 114 and/or token management application 172) may then receive an access request from the client 102-2 via client device 104-2. In response to the access request, the claims enabled application may redirect the client device 104-2 to the claims enabled application's trusted STS provider, i.e., federated identity application 162 (e.g., MICROSOFT AD FS) where the federated identity application 162 may communicate with directory service application 110 and negotiate with the client device 104-2 to provide the client device 104-2 with a security token (e.g., a SAML token). Optionally, federated identity application 162 may additionally include authentication type information in the security token which may indicate that the client 102-2 has been authenticated using the client's identity token and associated PIN.

Still continuing with the above illustration, the claims enabled application may then receive the security token (e.g., the SAML token) from client device 104-2, which was provided by the federated identity application 162, where the claims enabled application may authenticate or validate the security token by determining whether the security token was property issued by a trusted federated identity application, such as, for example, federated identity application 162. To facilitate the authentication of subsequent communications with the claims enabled application, the claims enabled application may also provide a trusted session cookie (e.g., a FedAuth cookie) to the client device 104-2 for subsequent communications. Optionally, the claims enabled application may determine whether the client 102-2 was authenticated based on the use of an identity token by, for example, determining whether the security token comprises an SID for a security group that includes client 102-2 indicating that the client 102-2 has been authenticated by an identity token and the associated PIN. The claims enabled application may reject client device 104-2 access to the claims enabled application, when the client 102-2 was not authenticated based on the client's identity token. In this manner, at least a trusted connection can be established between a client device 104-2 and a claims enabled application for clients 102-*a* that have been authenticated based on at least two factor authentication, i.e., identity token (i.e., the possession factor) and associated PIN (i.e., the knowledge factor).

In various embodiments, the authentication token management system 100 may further optionally comprise server device 106 which may be optionally arranged to execute, among other applications, admin management application 114. The admin management application 114 may generally be arranged to authenticate one or more clients 102-*a* for requesting one or more service accounts and receive requests from one or more clients 102-*a* to access one or more server devices, elevate access permissions, and authenticate the one or more requests received from clients 102-*a*. Additionally, the admin management application 114 may be further arranged to manage, authorize, provision, and enable one or more service accounts. Furthermore, the admin management application 114 may be arranged to provision some service accounts with elevated access permissions and limited role, limited scope, and limited lifetime, as requested by the clients 102-*a*, otherwise known as just-in-time (JIT) provisioned accounts (i.e., JIT accounts), and notify the clients 102-*a* with service account information associated with the provisioned service accounts (e.g., a provisioned JIT account).

To enable one or more clients 102-*a* to be authenticated, the admin management application 114 may be arranged to request and/or receive at least a portion of the client account information (e.g., account UPN, account identifier, and/or account password) from the one or more clients 102-*a* via client devices 104-b where the received client account information may be associated with a client account of the one or more clients 102-*a*. Once the client account information is received, the admin management application 114 may be further arranged to communicate via network interconnect 112 and one or more APIs of the directory service application 110 to authenticate the received client account information (e.g., account UPN, account identifier, and/or account password) associated with one or more clients 102-*a*.

Additionally and/or alternatively, the admin management application 114 may comprise a claims enabled application arranged to receive security tokens (e.g., SAML tokens) issued by federated identity application 162 from one or more client devices 104-*b.* The admin management application 114 may be further arranged to authenticate and identify the one or more clients 102-*a* requesting service accounts based on the received security tokens. The received security tokens may comprise one or more claims which may include the client account information associated with one or more clients 102-*a*. By utilizing security tokens received from client devices 104-b, the admin management application 114 may establish at least a trusted connection with one or more client devices 104-*b*. To further protect the trusted connection from being comprised or tampered with by an attacker, the admin management application 114 may also utilize one or more secure communications protocols (e.g., Hypertext Transfer Protocol Secure (HTTPS)) to establish an encrypted connection. In this manner, a secure connection (e.g., a trusted and encrypted connection) may be established between the admin management application 114 and one or more client devices 104-*b* for the request of one or more service accounts.

In some embodiments, once the one or more clients 102-*a* have been authenticated, the admin management application 114 may be arranged to enable one or more authenticated clients 102-*a* to input service account request information in order to request for one or more service accounts to access one or more resources and/or assets in the datacenter 142. The service account request information may include, but is not limited to, one or more actions or tasks to be performed, the one or more server devices 140-*i-j,* and a requested lifetime information associated with the one or more actions or tasks. The requested lifetime information may include, but is not limited to, a specific time or elapse of time of when the service account expires and becomes disabled and/or a specific time or elapse of time when the service account is removed. Optionally, the admin management application 114 may limit the requested lifetime information for a service account to a ceiling value of 96 hours or 4 days so that any request for a service account with a lifetime greater than 96 hours (e.g., 4 days) will be limited to 96 hours or 4 days. The embodiments are not limited in this context.

In some embodiments, the admin management application 114 may be arranged to provision a service account by retrieving an existing service account associated with a client based at least partially on the requested role and scope information determined based on the received service account request information (e.g., one or more actions or tasks to be performed and the one or more server devices 140-*i*-*j*) and service account role and scope information for existing service accounts. Additionally or alternatively, the admin management application 114 may be arranged to provision a service account by retrieving an existing service account associated with a client based at least partially on the requested role and scope information received from one or more clients 102-*a* via client devices 104-*b* and the service account role and scope information for existing service accounts.

Exemplary requested roles and/or service account roles may include, but are not limited to, administrators, backup operators, debuggers, remote users, testers, and the like. It may be appreciated that each role may be further associated with a set of access permissions that may grant and/or deny access to the one or more resources and/or assets and/or components of the one or more resources and/or assets. Exemplary requested scope and/or service account scope may include, but are not limited to, breach boundary 138-1-1 including one or more server devices 140-1-1, 14-1-2, 14-1-3 or any other resources and/or assets and/or components of the resources and/or assets.

In some embodiments, the admin management application 114 may be arranged to determine whether a service account having the same or substantially similar requested role and scope already exists for the client. The admin management application 114 may then be arranged to retrieve an existing service account from service accounts datastore 126, when the service account role and scope for a service account that already exists for the client is the same or substantially similar to the requested role and scope.

Alternatively, when the admin management application 114 determines that a service account having the requested role and scope does not exist for that client, the account provisioning component 120 may be configured to automatically create a new service account for that client. This is otherwise known as lazy provisioning of a service account, where the admin management application 114 may be configured to create service accounts only when a previous service account with equivalent or substantially similar role and scope does not already exist for the client.

In some embodiments, the admin management application 114 may be further arranged to create the new service account and its associated service account information based at least partially on the service account request information (e.g., the requested role and scope information, requested lifetime information, etc.), and the client account information. For example, assume that the client account information for the client 102-2 may comprise client account UPN "EllenAdams@.contoso.com", and that the requested roles includes a remote user and a debugger and requested scope includes breach boundary 138-1-1. The admin management application 114 may create the new service account with service account information comprising the service account UPN "EllenAdams_RemoteDebugger@domain136-1.contoso.com" so that the client 102-2 may identify at least the one or more roles for the service account based at least partially on the UPN. Additionally, the admin management application 114 may also store the newly created service account in the service accounts datastore 126 and associate the newly created service account with the client account for that client.

To ensure that the resources and/or assets managed by one or more directory service server devices 130-*l* are accessible and/or serviceable by one or more clients 102-*a* using the newly created service accounts, the admin management application 114 may be further arranged to identify the appropriate directory service server device managing the one or more breach boundaries 138-*g*-*h* that includes the one or more resources and/or assets the client requested to access and/or service. Once the appropriate directory service server device is identified, the admin management application 114 may be further arranged to communicate with the identified directory service server device via network interconnect 112 and one or more APIs of the identified directory service server device in order to create the service account. Additionally, the admin management application 114 may be arranged to store the newly created service account and the associated service account information in the service accounts datastore 126 and associate the newly created service account and the associated service account information with the client account so that it may be retrieved and re-used.

In some embodiments, once a service account has been retrieved or created, the admin management application 114 may be further arranged to enable the service account based at least partially on the requested role and scope information, so that the retrieved or created service account has the same role and scope as requested by the client. This also ensures that each service account that is created or retrieved comprises a set of minimally scoped access permissions needed to access or perform a service on a resource and/or asset as requested by the client. To enable the service account, admin management application 114 may be further arranged to grant or provide a set of access permissions to the service account based at least partially on the requested role and scope information.

To ensure that a proper set of access permissions are granted or provided to a provisioned service account, the admin management application 114 may be arranged to identify a directory service server device managing the appropriate breach boundary security groups 168-*m*-*n* and identify one or more breach boundary security groups 168-*m-n* configured to grant access to one or more resources and/or assets by utilizing network interconnect 112 and one or more APIs of the directory service applications (not shown) of the one or more directory service server devices 130-*l*. Once the appropriate directory service server device and one or more breach boundary security groups 168-*m*-*n* have been identified, the admin management application 114 may be configured to communicate with the identified directory service server device to associate the provisioned service account with the identified breach boundary security group.

In some embodiments, the admin management application 114 may be arranged to associate the service account with breach boundary security groups 168-*m*-*n* by adding the service account to one or more breach boundary security groups 168-*m*-*n* as members so that the service account may be granted a set of access permissions to access the one or more resources and/or assets within a breach boundary associated with the breach boundary security group. To further limit the scope of impact an attacker may cause using a compromised service account, the admin management application 114 may be further arranged limit the number of breach boundary security groups 168-*m*-*n* a service account may be associated with (e.g., each service account may only be associated with a single breach boundary security group).

In some embodiments, the admin management application 114 may be further arranged to enable the one or more service accounts with a limited lifetime. To ensure that one or more service accounts are enabled for a limited lifetime, the admin management application 114 may be further arranged to manage the lifetime associated with each service account based on the service account lifetime information or a predefined service account lifetime information. The admin management application 114 may be further arranged to disable and/or remove one or more service accounts after a period of time has elapsed as indicated by the service account lifetime information or a predefined service account lifetime information. It may be appreciated that the service account lifetime information may include, but is not limited to, a specific time or elapse of time of when the service account expires and becomes disabled and a specific time or elapse of time of when the service account is removed.

In some embodiments, the service account lifetime information may be determined and/or derived based on the service account request information received from one or more clients 102-*a* via client devices 104-b for a given implementation. In other embodiments, the service account lifetime information may be determined and/or derived based on the one or more roles as indicated by the service account role and scope information, where some roles (e.g., a remote user and a debugger) may have an associated service account lifetime of 2 hours while other roles (e.g., a backup operator) may have an associated life time of 4 hours. The embodiments are not limited in this context.

In one exemplary embodiment, the lifetime of the service account may start from the time when the service account is provisioned (e.g., provisioned by the admin management application 114) and ends at the specified time or elapse of time based on the service account lifetime information. Alternatively, the lifetime of the service account may start from the time when the service account is first utilized (e.g., a client attempts to access a resource and/or asset using the service account) and ends at the specified time or elapse of time based on the service account lifetime information. The exemplary embodiments are not limited in this context.

In another exemplary embodiment, the admin management application 114 may be further arranged to receive one or more access approval requests from one or more directory service server devices 130-*l* via network interconnect 112, when one or more clients 102-*a* access the one or more resources and/or assets managed by the one or more directory service server devices 130-*l*. The admin management application 114 may be further arranged to automatically approve or allow the one or more clients 102-*a* to access the one or more resources and/or assets managed by the respective directory service server devices 130-*l*, when the lifetime of the service account has not expired.

Alternatively, the admin management application 114 may be arranged to automatically deny the one or more clients 102-*a* any access to the one or more resources and/or assets managed by the respective directory service server devices 130-*l*, when the lifetime of the service account has expired. Additionally, in one embodiment, the admin management application 114 may also be arranged to disable the service account and/or disassociate the service account from the one or more breach boundary security groups.

In one exemplary embodiment, the admin management application 114 may disable the service account by denying all access approval requests and generate a new authentication token without providing the newly generated authentication token to clients 102-*a*. Moreover, the admin management application 114 may generate a new authentication token without providing the newly generated authentication token to clients 102-*a* by requesting, for example, the authentication token management application 172 to reset the authentication token for a service account. The admin management application 114 may also disassociate the service account by removing the service account from membership in the one or more breach boundary security groups.

Additionally or alternatively, admin management application 114 may be further arranged to periodically scan the service accounts datastore 126 for any enabled service accounts and disable any service accounts with lifetimes that have expired based on the service account lifetime information. In some embodiments, a service account that becomes disabled will also immediately terminate (e.g., a forced log off) any service accounts currently in use and their associated active actions or tasks. To ensure that one or more directory server devices 130-*l* managing the one or more resources and/or assets are properly synchronized with the service accounts datastore 126, the admin management application 114 may be further arranged to communicate via network interconnect 112 and one or more APIs of the directory service application of the directory service server devices 130-*l* to update service account lifetime information of the service accounts and/or disable any service accounts with expired lifetimes.

After the service account is enabled, the admin management application 114 may be arranged to notify and provide to one or more clients 102-*a* via one or more client devices 104-*b*, service account information in one or more notification messages. Exemplary notification messages may include, but are not limited to, mobile SMS messaging, automated voice calls, email, interactive web based forms, web alerts, internet and/or intranet based messaging applications, or any other means for notifying one or more clients 102-*a* regarding the approval and/or rejection of elevated access permissions and providing the one or more clients 102-*a* with request approval information, supervisory approval information, and/or service account information. To facilitate the client in setting or generating authentication tokens, the admin management application 114 may be further arranged to provide, in one or more notification messages, a reference (e.g., a URL such as "https://AuthenticationTokenManagementFrontEnd" or "https://AuthenticationTokenManagementFrontEnd.contoso.com") to the authentication token management application 172 so that one or more clients 102-*a* may access the authentication token management application 172 to set and/or generate one or more authentication tokens for one or more provisioned service accounts.

By way of illustration, assume that the client 102-2 having the name of "Ellen Adams" and client account UPN of "EllenAdams@contoso.com" requested for a service account to access one or more server devices 140-*i*-*j* over at least an encrypted connection between the client device 104-2 and the admin management application 114. In response to the request, the admin management application 114 may first authenticate the client 102-2 for accessing the admin management application 114 based on the client account UPN (e.g., "EllenAdams@contoso.com") and client account password to establish a secure connection (e.g., trusted and encrypted connection). Alternatively, the admin management application 114 may authenticate the client 102-2 based on two factor authentication (e.g., smart card and associated PIN) and the received security token to establish a secure connection. Once authenticated, the client 102-2 may request for a service account to remotely debug the server device 140-1-1 with a requested lifetime of 4 hours over the established secure connection. In response to the request, the admin management application 114 may determine and/or receive the requested role and scope information received from client 102-2 for a service account with access permissions including requested roles of a remote user and debugger and requested scope for breach boundary 138-1-1.

Continuing with the above illustration, the admin management application 114 may then determine whether to authorize the provisioning of a service account based on the client account information associated with the client 102-2 and the service account request information (e.g., the requested role and scope information) in order to ensure that the request for a service account with a set of access permissions that is within the scope or in comport with the client account of the client 102-2. Once the request has been authorized, the admin management application 114 may determine whether an existing service account having the same or substantially similar role and scope as the requested role and scope already exists for client 102-2 in the service account datastore 126.

Still continuing with the above illustration and assuming that the admin management application 114 has determined that there is no existing service account, the admin management application 114 may identify the directory service server device 130-1 among the one or more directory service server devices 130-/ that is implementing the breach boundary 138-1-1 utilizing breach boundary security group 168-1-1. The admin management application 114 may provision the service account by at least communicating via network interconnect 112 and one or more APIs of the directory service applications (not shown) of the directory service server device 130-1 so that the client 102-2 may be able to access the server devices 140-1-1, 140-1-2, 140-1-3, 140-1-4, 140-1-5, 140-1-6 managed by the directory service server device 130-1.

Still continuing with the above illustration, the admin management application 114 may also identify the breach boundary security group 168-1-1 as the breach boundary security group configured to grant a set of access permissions to server devices 140-1-1, 140-1-2, 140-1-3. The admin management application 114 may further associate by adding the provisioned service account to at least the identified breach boundary security group 168-1-1 in order to grant the provisioned service account a set of access permissions to server devices 140-1-1, 140-1-2, 140-1-3. It may be appreciated that the admin management application 114 may also associate by adding the provisioned service account to other groups (.e.g., remote user group, debugger groups, etc.) in order to grant access permissions as remote user and debugger so that the provisioned service account may be used by client 102-2 to perform remote debugging on server devices 140-1-1, 140-1-2, 14-1-3.

Still continuing with the above illustration, the admin management application 114 may also enable the provisioned service account based on determined service account lifetime information derived from the requested lifetime indicating that the service account lifetime is 4 hours. Assuming that the service account was provisioned at 12:00 PM to the client 102-2 and the lifetime for the provisioned service account starts from the time when the service account is provisioned, which is 12:00 PM, so that when the lifetime of the service account ends at 4:00 PM, the admin management application 114 may disable the service account and reset the authentication token associated with the provisioned service account twice utilizing the authentication token management application 172 in order to forcefully expire any active tokens (e.g., access tokens used in the execution of one or more processes on the server device 140-1-1) associated with the service account. Still continuing with the above illustration, once the service account is enabled, the admin management application 114 may notify the client 102-2 via client device 104-2 with the service account identifier or service account UPN (e.g., "EllenAdams_RemoteDebugger@domain136-1.contoso.com"), and a reference (e.g., a URL such as https://AuthenticationTokenManagementFrontEnd" or "https://AuthenticationTokenManagementFrontEnd.contoso.com") to the authentication token management application 172 so that Client 102-2 may access the authentication management application 172 to set and/or generate an authentication token for the provisioned service account. The client 102-2 may then utilize the provisioned service account with a generated authentication token to remotely debug server device 140-1-1 (e.g., using Remote Desktop Protocol (RDP)) before 4:00 PM via client device 104-2 and network interconnect 112.

In various embodiments, the authentication token management system 100 may further comprise server device 170 which may be generally arranged to execute, among other applications, authentication token management application 172. The authentication token management application 172 may generally be arranged to authenticate one or more clients 102-*a* accessing the authentication token management application 172 or requesting to generate authentication tokens for service accounts. The authentication token management application 172 may be arranged to receive the requests from one or more clients 102-*a* via network interconnect 112 and one or more client devices 104-*b* to generate one or more authentication tokens for one or more service accounts. Further, the authentication token management application 172 may be arranged to provide the clients 102-*a* via network interconnect 112 and one or more client devices 104-*b* with service account information associated with the service accounts and the generated authentication tokens for one or more clients 102-*a*. Additionally, the authentication token management application 172 may be further arranged to manage, generate, reset, and request to update and/or set one or more authentication tokens for one or more service accounts.

In various embodiments, the authentication token management application 172 may comprise an authentication token management component 174. The authentication token management component 174 may be generally arranged to authenticate or validate one or more clients 102-*a* requesting access to the authentication token management application 172, retrieval of service account information of the one or more service accounts, and/or generation of authentication tokens for the one or more service accounts managed by one or more directory service applications (not shown) of one or more directory service server devices 130-*l* and/or admin management application 114. The authentication token management component 174 may also be arranged to retrieve and provide the service account information of the one or more service accounts managed by one or more directory service applications (not shown) of one or more directory service server devices 130-/ and/or admin management application 114. Further, the authentication token management component 174 may also be arranged to receive authentication token reset request for one or more service accounts from the admin management application 114.

To enable one or more clients 102-*a* to be authenticated, authentication token management component 174 may be configured to request and/or receive at least a portion of the client account information (e.g., account UPN, account identifier, and/or account password) from the one or more clients 102-*a* via client devices 104-*b* where the received client account information may be associated with a client account of the one or more clients 102-*a*. Once the client account information is received, authentication token management component 174 may be further arranged to communicate via network interconnect 112 and one or more APIs of the directory service application 110 to authenticate the received client account information (e.g., account UPN, account identifier, and/or account password) associated with one or more clients 102-*a*.

Additionally and/or alternatively, the authentication token management component 174 may comprise a claims enabled application configured to receive security tokens (e.g., SAML tokens) issued by federated identity application 162 from one or more client devices 104-b. The authentication token management component 174 may be further configured to authenticate and identify the one or more clients 102-*a* requesting service accounts based on the received security tokens. The received security tokens may comprise one or more claims which may include the client account information associated with one or more clients 102-*a*. By utilizing security tokens received from client devices 104-*b*, the authentication token management application 172 may establish at least a trusted connection with one or more client devices 104-*b*. Optionally, the authentication token management component 174 may further provide a trusted session cookie (e.g., a FedAuth cookie) to the one or more client devices 104-*b*, so that the authentication token management component 174 may establish a trusted connection with one or more client devices 104-*b* for any subsequent communications between the authentication token management application 172 and the one or more client devices 104-*b*.

It may be appreciated that in instances when a trusted session cookie was not provided to the one or more client devices 104-*b* to maintain a trusted session for subsequent communications, the authentication token management component 174 may be configured to validate each request to retrieve service account information or generate authentication token received from the one or more client devices 104-*b*. For example, the authentication token management component 174 may validate a request by verifying that the received security token is issued by trusted STS provider, e.g., federated identity application 162, and that the client requesting to generate authentication token has been authenticated based on two factor authentication (e.g., a smart card and an associated PIN).

To further protect the trusted connection from being comprised or tampered with by an attacker, the authentication token management component 174 may also utilize one or more secure communications protocols (e.g., Hypertext Transfer Protocol Secure (HTTPS)) to establish an encrypted connection. In this manner, a secure connection (e.g., a trusted and encrypted connection) may be established between the authentication token management application 172 and one or more client devices 104-*b* for the managing one or more authentication tokens of one or more service accounts.

Once a secure connection is established between the authentication token management application 172 and each client device of the one or more client devices 104-*b,* the authentication token management component 174 may be configured to receive one or more requests from clients 102-*a* via client devices 104-*b* over the respective secure connections for service account information of one or more service accounts associated with a client account of a client. The authentication token management component 174 may be configured to request and retrieve the service account information for one or more service accounts via authentication token proxy component 178 in response to the received one or more requests based at least partially on the client account information (e.g., client account identifier, client account UPN, etc.).

Once the service account information for one or more service accounts has been retrieved via the authentication token proxy component 178, the authentication token management component 174 may be configured to provide service account information for one or more service accounts to one or more client devices 104-*b* for display to the one or more clients 102-*a* and/or enable the one or more clients 102-*b* to generate one or more authentication tokens. Additionally or alternatively, the authentication token management component 174 may be configured to automatically retrieve and provide one or more service accounts based at least partially on the client account information in response to receiving the security token associated with one or more client devices 104-*a* and/or clients 102-*a*.

Based on the service account information for one or more service accounts provided to the one or more client devices 104-*b*, the one or more client devices 104-b may be configured to receive one or more clients 102-*a* inputs (e.g., keyboard inputs, mouse inputs, touch inputs, etc.) to request to generate one or more authentication tokens for the one or more service accounts. The authentication token management component 174 may be further configured to receive the one or more request from the one or more clients 102-*a* via the one or more client devices 104-*b* to generate to one or more authentication tokens. It may be appreciated that each request to generate an authentication token may be associated with a token request information which may include, but is not limited to, service account information, such as, the service account identifier, the service account UPN, and/or any other information to identify the service account.

Additionally, to further ensure the security of the generation of authentication tokens, the authentication token management component 174 may be further configured to validate the request and the token request information to generate the authentication tokens for a service account by determining whether the service account for which an authentication token was requested to be generated, is associated with the client account, so that a client may be limited to only being able to generate authentication tokens for service accounts associated with their client account. The authentication token management component 174 may be further configured to reject any request to generate the authentication token for a service account when authentication token management component 174 determines that the service account for which the authentication token is requested to be generated is not associated with the client account.

It may be further appreciated that for service accounts that may be optionally associated with at least a limited lifetime as indicated by the service account lifetime information, the generated authentication token may live or persist for the same period as the service account remains enabled or active. Thus, as previously discussed, at the end of the lifetime for a service account, i.e., when the lifetime of a service account expires and the service account is disabled, the authentication token management component 174 may be configured to receive a request to reset the authentication token of the expired service account at least once (or twice or more) so that any active tokens (e.g., access tokens) associated with the service account may expire. It may be appreciated that each request to reset an authentication token may be associated with a token reset information which may include, but is not limited to, service account information, such as, the service account identifier, the service account UPN, and/or any other information to identify the expired service account for which a reset of the authentication token for a service account is desired.

In various embodiments, the authentication token management application 172 may comprise an authentication token generation component 176. The authentication token generation component 176 may be generally arranged to generate one or more authentication tokens with varying complexity for one or more service accounts, after the request to generate the one or more authentication tokens has been validated by the authentication token management component 174. Additionally or alternatively, the authentication token generation component 176 may be further arranged to generate one or more authentication tokens for a service account in response to request to reset the authentication token for one or more service accounts. The authentication token generation component 176 may be further arranged to update or set the generated authentication token for the one or more service accounts via the authentication token proxy component 178.

To generate the authentication tokens in a secure manner, the authentication token generation component 176 may be configured to generate the authentications tokens by utilizing one for more secure hardware and/or software components (e.g., a Trusted Platform Module (TPM), System.Web.Security.Membership of the MICROSOFT .NET Framework Library, etc.). Moreover, the authentication token generated by the authentication token generation component 176 may comprise random data (e.g., random bytes, etc.) and/or random character strings encoded in one or more formats (e.g., Universal Character Set (UCS) Transformation Format-8-bit (UTF-8), UTF-16-bit (UTF-16), Basic String or binary string (BSTR), C-String, etc.) utilizing, for example, one or more cryptographically secure random number generators and/or hash functions implemented by one or more secure hardware and/or software components. Additionally, the authentication token generation component 176 may generate the authentication tokens based at least on a length/size parameter and/or character class parameter.

In some embodiments where the authentication token may comprise a plaintext random password, passcode, passphrase, PINs and the like, the length/size parameter may specify a minimum length (e.g., 25 characters) to be generated by the authentication token generation component 176. Alternatively, the length parameter may specify a range (e.g., between 25 to 30 characters) so that the authentication token generation component 176 may generate plaintext random passwords of varying length that falls within and including the lower and upper bounds of the range. To further ensure the security of the plaintext random passwords, the length parameter may configured to specify the plaintext random passwords to be generated with hundreds or even thousands of characters in length so that one or more human clients 102-*a* may encounter substantial difficulty in memorizing and/or communicating the generated random password accurately via ordinary means and/or mediums (e.g., hand written note, verbal communication, etc.).

In those embodiments where the authentication token may comprise a plaintext random password, passcode, passphrase, PINs and the like, a character class parameter may be used to specify one or more combinations of character classes so that the authentication token generation component 176 may generate an authentication token comprising at least one character in the one or more specific character classes. Exemplary character classes may include, but are not limited to lower case letters (e.g., a through z), upper case letters (e.g., A through Z), symbols (e.g., "'∼!@#$%^&*()[]{};:''',.?//*-+"), numbers (e.g., numbers 0 through 9) or any other character classes that may be defined in one or more formats (e.g., UTF-8, UTF-16, etc.).

In those embodiments where the authentication token may comprise a plaintext random password, passcode, passphrase, PINs and the like, the authentication token generation component 176 may be further configured to generate an authentication token comprising one or more character classes contained on a standard input device (e.g., a standard 104 keys keyboard) in order to facilitate entry of the authentication token by using the standard input device regardless of language and/or locale information associated with the one or more service accounts. Once an authentication token has been generated, the authentication token generation component 176 may be configured to update or set the authentication token for one or more service accounts via authentication token proxy component 178 based at least partially on the proxy authentication information (e.g., a shared secret digital certificate between the authentication token proxy component 178 and the token management proxy application 192 and a digital fingerprint or thumbprint of the shared secret digital certificate).

To ensure that each generated authentication token is unique and will not be reused for a different service account, the authentication token generation component 176 may be further configured to store a digest or hash of one or more previously generated and used authentication tokens in an authentication token collision datastore (not shown). Thus, in one exemplary implementation, the authentication token generation component 176 may be configured to generate an authentication token, determine or calculate the hash or digest of the generated authentication token, and search or match the newly generated authentication token with those stored in authentication token collision datastore by comparing the hashes or digests in order to determine whether a previously generated authentication token has already been used and/or generated. If no match is found, the authentication token generation component 176 may store the hash or digest of the newly generated authentication token in the authentication token collision datastore, and the newly generated authentication token may be used to update the service account. If a match is found, authentication token generation component 176 may then generate a new authentication token and the above process is repeated until a unique authentication token is generated.

It may be appreciated that once an authentication token is generated and that generated authentication token is utilized to update or set the authentication token for a service account, the generated authentication token may not be recovered for one or more clients 102-*a* once it is lost. Thus, in some embodiments, every authentication token generated by the authentication token generation component 176 may also be an unrecoverable, immutable, and/or unique authentication token. The embodiments are not limited in this context.

It may be further appreciated that the authentication token generation component 176 may be configured to be the only component for the generation of authentication tokens in the authentication token management system 100 so that authentication token generation may be performed in a centralized location, i.e., within the authentication token management application 170, so that the generation of authentication tokens may be secured and monitored.

In various embodiments, the authentication token management application 172 may comprise an authentication token proxy component 178. The authentication token proxy component 178 may be generally arranged to store proxy authentication information, and establish at least an encrypted connection with the token management proxy application 192 executing on the server device 190 via network interconnect 112 utilizing one or more secure communication protocols (e.g., HTTPS) and the proxy authentication information. Moreover, to enable the establishment of at least an encrypted connection, the token management proxy application 192 contained in the datacenter 142 may expose or implement a public endpoint so that the authentication token proxy component 178 may connect and establish at least the encrypted connection with the token management proxy application.

In various embodiments, the authentication token proxy component 178 may be further arranged to manage and communicate with the token management proxy application 192 via the established encrypted connection. The authentication token proxy component 178 may also be arranged to retrieve service account information of one or more service accounts by communicating via network interconnect 112 with the token management proxy application 192. The authentication token proxy component 178 may also be arranged to receive service account information of one or more service accounts from the token management proxy application 192 over the established encrypted connection. The authentication token proxy component 178 may be further arranged to request to update or set the generated authentication token of the one or more service accounts by communicating via with token management proxy application 192 over the established encrypted connection.

To retrieve one or more service accounts associated with one or more clients 102-*a*, the authentication token proxy component 178 may request service account information for one or more service accounts from the token management proxy application 192 by providing at least the client account information (e.g., client account identifiers, client account UPNs, etc.) and a portion of the proxy authentication information (e.g., the digital fingerprint or thumbprint of the shared secret digital certificate) stored by the authentication token proxy component 178 over the established encrypted connection. In response to the request, the authentication token proxy component 178 may also receive the requested service account information of one or more service accounts associated with the one or more clients 102-*a* over the established encrypted connection.

To update or set the authentication token for one or more service accounts associated with one or more clients 102-*a*, the authentication token proxy component 178 may be configured to request to update or set the generated authentication token of the one or more service accounts by providing at least the service account information (e.g., service account identifiers, service account UPN, etc.), the generated authentication token, and a portion of the proxy authentication information (e.g., the digital fingerprint or thumbprint of the shared secret digital certificate) over the established encrypted connection.

To ensure that the generated authentication tokens cannot be updated or modified or recoverable at a later time by one or more clients 102-*a* using the service accounts, the authentication token proxy component 178 may be configured to request to update or set the generated authentication token as an unrecoverable and/or immutable authentication token (at least with respect to one or more service accounts) via the token management proxy application 192 over the established encrypted connection.

To reset the one or more authentication tokens for one or more service accounts, the authentication token proxy component 178 may be configured to request to update or set the authentication token of one or more service accounts by providing at least the at least the service account information (e.g., service account identifiers, service account UPN, etc.), the generated authentication token, and proxy authentication information (e.g., the digital fingerprint or thumbprint of the shared secret digital certificate) over the established encrypted connection.

In various embodiments, the authentication token management application 172 may further comprise an authentication token notification component 180. The authentication token notification component 180 may be generally arranged to provide the generated authentication tokens to the one or more clients 102-*a* via the previously established secure connection between the authentication token management application 172 and one or more client devices 104-*b*.

In one embodiment, the authentication token notification component 180 may be configured to provide, via the previously established secure connection, at least the generated authentication tokens to one or more client devices 104-*b* as hidden elements or non-visible elements and enable the one or more client devices 104-*b* to programmatically access (e.g., programmatic clipboard access and/or Document Object Model (DOM) access) the authentication tokens. Optionally, the authentication token notification component 180 may also be configured to provide the service account identifiers or service account UPNs associated with authentication tokens as a hidden element or non-visible element for programmatic access.

Additionally or alternatively, the authentication token notification component 180 may also be configured to provide the generated authentication tokens as elements capable of being revealed on the client devices 104-*b* in response to a demand by clients 102-*a* to reveal the authentication tokens. Optionally, the authentication token notification component 180 may be further configured to provide the service account identifiers or service account UPNs associated with authentication tokens as a visible element capable of being revealed on client devices 104-*b* in response to a demand by clients 102-*a* to reveal the authentication tokens so that the service account identifiers and/or service account UPNs, and the generated authentication tokens may be displayed and visible to one or more clients 102-a, simultaneously.

Once the one or more client devices 104-*b* receives the authentication tokens, the client devices may 104-*b* may automatically and securely store the service account identifiers and/or service account UPNs, and the associated authentication tokens in the authentication token datastore 166 (e.g., Password Safe) in an encrypted format utilizing one or more encryption algorithms (e.g., Twofish symmetric key block cipher). It may be appreciated that after the one or more client devices 104-*b* receives the generated authentication tokens provided by the authentication token notification component 180, the generated authentication tokens may not be accessible, viewable or recoverable at a later time unless the authentication tokens were stored by the one or more clients 102-*a* in, for example, the authentication token datastore 166 or elsewhere (e.g., hand written, if possible). Once stored, the one or more clients 102-*a* may then retrieve the stored service account identifiers and/or service account UPNs, and the associated authentication tokens to access one or more resources and/or assets (e.g., server devices 140-*i*-*j*).

It may be appreciated that in instances where the authentication tokens were generated in response to a request to reset authentication tokens for one or more service accounts, the authentication token notification component 180 may be configured to not provide the generated authentication tokens to the clients 102-*a* via client devices 104-*b* over the respective secure connections.

It may be further appreciated that by utilizing the admin management application 114 to provision one or more service accounts in conjunction with the authentication token management application 172 to generate authentication tokens for the one or more provisioned service accounts, in some embodiments, every service account in one or more SaaS systems in datacenter 142 may be replaced with or utilize a machine generated authentication token.

By way of illustration, assume that the client 102-2 having the name of "Ellen Adams" and client account UPN of "EllenAdams@contoso.com" requested for a service account to remotely debug the server device 140-1-1 with a requested lifetime of 4 hours. In response to the request for a service account, the admin management application 114 provisioned a service account with a service account UPN "EllenAdams_RemoteDebugger@domain136-1.contoso.com" and notified the client 102-2 via client device 104-2 regarding the service account UPN and a URL https://AuthenticationTokenManagementFrontEnd" or "https://AuthenticationTokenManagementFrontEnd.contoso.com" to the authentication token management application 172. The client 102-2 then request via a client application (e.g., a web browser) executing on client device 104-2 to access the authentication management application 172 over at least an encrypted connection.

Continuing with the above illustration and in response to the request to access the authentication management application 172, the authentication token management component 174 may first authenticate the client 102-2 for accessing the authentication token management application 172 based on the client account UPN (e.g., "EllenAdams@contoso.com") and client account password in order to establish a secure connection (e.g., trusted and encrypted connection). Alternatively, the authentication token management component 174 may authenticate the client 102-2 based on two factor authentication (e.g., smart card and associated PIN) and the received security token to establish a secure connection. Once authenticated, the client 102-2 may request via client device 104-2 (e.g., asynchronous javascript (AJAX) POST) for one or more service accounts associated with the client account UPN "EllenAdams@contoso.com" over the established secure connection.

Still continuing with the above illustration and in response to the request for one or more service accounts or automatically based on the successful authentication of the client 102-2, the authentication token management component 174 may then request via authentication token proxy component 178, service account information of one or more service accounts associated with the client account UPN "EllenAdams@contoso.com". Moreover, the authentication token proxy component 178 may then issue a request (e.g., a remote PowerShell command) to retrieve service account information against a public endpoint exposed by the token management proxy application 192 contained in the datacenter 142. The request may include, but is not limited to, client account UPN "EllenAdams@contoso.com" and a portion of the proxy authentication information, such as, a digital fingerprint or thumbprint of a shared secret certificate. The authentication token management component 174 may then receive service account information for one or more service accounts, which may include, but is not limited to, the service account information for the previously provisioned service account having the service account UPN of "EllenAdams_RemoteDebugger@domain136-1.contoso.com".

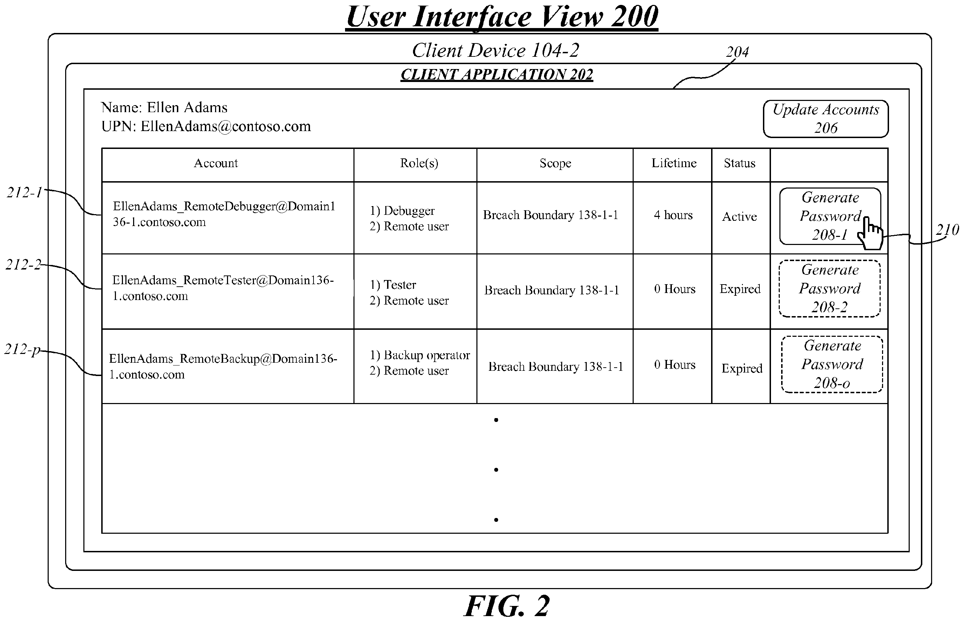

Still continuing with the above illustration, the authentication token management component 174 may then provide the received service account information associated with the client 102-2 to the client application of the client device 104-2, such as, for example, a web page in a web browser. An exemplary embodiment of the service account information for one or more service accounts provided to the client application of the client device 104-2 is illustrated in FIG. 2. In response to the service account information, the client 102-2 may request via client device 104-2 (e.g., AJAX POST) to generate an authentication token for a service account identified by a service account identifier or service account UPN.

Still continuing with the above illustration and in response to the request to generate an authentication token, the authentication token generation component 176 may generate, for example, a unique plaintext random password based on a length parameter (e.g., 8 characters) and a character class parameter (e.g., a-z, A-Z, 0-9, and symbols) so that an exemplary plaintext random password may include "Xe2&a^%5". It may be appreciated that the exemplary plaintext random password is provided for purposes of understanding, as in practice, the generated authentication token such as, the exemplary plaintext random password may contain substantially more characters (e.g., 25-30 characters or even 100 to 10,000 characters in length) and may be substantially more complex.

Still continuing with the above illustration and after the authentication token, such as, for example, the exemplary plaintext random password, has been generated, the authentication token generation component 176 may issue a request via authentication token proxy component 178 to update or set the authentication token to the exemplary plaintext random password "Xe2&a^%5". Moreover, the authentication token proxy component 178 may then issue a request (e.g., a remote PowerShell command) to update or set the authentication token against the public endpoint exposed by the token management proxy application 192 contained in the datacenter 142. The request may include, but is not limited to, service account UPN "EllenAdams_RemoteDebugger@domain136-1.contoso.com", the exemplary plaintext random password "Xe2&a^%5", and a portion of the proxy authentication information, such as, the digital fingerprint or thumbprint of a shared secret certificate.

Still continuing with the above illustration and after the authentication token has been updated or set for the service account, the authentication token notification component 180 may notify and/or provide the client 102-2 via client device 104-2 over the established secure connection (e.g., the trusted and encrypted connection utilizing HTTPS) with at least the exemplary plaintext random password "Xe2&a^%5" (e.g., stored in a JavaScript Object Notation (JSON) array) as a hidden div in a web page on the web browser of the client device 104-2. Optionally, the hidden div may also contain the service account UPN "EllenAdams_RemoteDebugger@domain136-1.contoso.com".

Still continuing with the above illustration and after the authentication token notification component 180 has notified and/or provided the client 102-2 with the exemplary plaintext random password and/or service account UPN, the client 102-2 may then access the exemplary plaintext random password "Xe2&a^%5" and/or the service account UPN via the clipboard of the client device 104-2 and store the exemplary plaintext random password "Xe2&a^%5" and/or service account UPN "EllenAdams_RemoteDebugger@domain136-1.contoso.com" in an authentication token datastore 166 communicatively coupled to the client device 104-2 such as, for example Password Safe. Additionally or alternatively, the exemplary plaintext random password and/or service account UPN may be presented as elements capable of being revealed on the client device 104-2, in response to a demand by client 102-2 to reveal the exemplary plaintext random password (i.e., "reveal on demand"). Additionally or alternatively, a plugin component associated with a web browser on the client device 104-2 may be configured to automatically access via a DOM object the exemplary plaintext random password "Xe2&a^%5" and/or service account UPN "EllenAdams_RemoteDebugger@domain136-1.contoso.com" and automatically store the exemplary plaintext random password and/or service account UPN in an authentication token datastore 166 without any input from the client 102-2.

Still continuing with the above illustration and after the exemplary plaintext random password and/or service account UPN has been provided to the client 102-2 via client device 104-2 over the established secure connection, the client 102-2 may then utilize the provisioned service account identified by the service account UPN "EllenAdams_RemoteDebugger@domain136-1.contoso.com" with the exemplary plaintext random password "Xe2&a^%5" to access and remotely debug server device 140-1-1 (e.g., using Remote Desktop Protocol (RDP)) in the datacenter 142 within the service account lifetime of 4 hours.

In various embodiments, the datacenter 142 of the authentication token management system 100 may comprise server device 190 which may be generally arranged to execute, among other applications, token management proxy application 192. The token management proxy application 192 may be communicatively coupled to one or more directory service server devices 130-*l* via one or more networks in the datacenter 142 and/or network interconnect 112 in order to retrieve service account information of one or more service accounts and/or update or set one or more authentication tokens for one or more service accounts.

The token management proxy application 192 may be generally arranged to expose or implement a public endpoint in the datacenter 142 to enable the authentication token management application 172 to connect and establish at least an encrypted connection (e.g., an encrypted connection utilizing HTTPS protocol) between the authentication token management application 172 and the token management proxy application 192. The token management proxy application 192 may be arranged to store a proxy authentication information which may be utilized to at least establish the encrypted connection. The token management proxy application 192 may be further arranged to receive requests for service account information, retrieve service account information, and update or set authentication tokens for one or more service accounts.

In various embodiments, the token management proxy application 192 may comprise a service account retrieval component 194. The service account retrieval component 194 may be generally arranged to receive requests for service account information from the authentication token proxy component 178 over the established encrypted connection, retrieve the service account information from one or more directory service applications of the one or more directory service server devices 130-*l*, and provide the retrieved service account information to the authentication token proxy component 178 over the established encrypted connection.

In one embodiment, the service account retrieval component 194 may be configured to receive requests to retrieve service account information associated with a client account. Each request may include at least the client account information (e.g., client account identifiers, client account UPNs, etc.) and a portion of the proxy authentication information (e.g., the digital fingerprint or thumbprint of the shared secret digital certificate). In response to the received request for service account information, the service account retrieval component 194 may be configured to authorize the received request based on the received portion of the proxy authentication information.

Once the request is authorized, the service account retrieval component 194 may be further configured to communicate via network interconnect 112 and one or more APIs of the directory service applications (not shown) of one or more directory service server devices 130-*l* to retrieve service account information for one or more service accounts associated with client accounts identified by the client account identifiers or client account UPNs. Once the service account information has been retrieved, service account retrieval component 194 may be configured to provide the retrieved service account information for one or more service accounts to the authentication proxy component 178 over the established encrypted connection.

In various embodiments, the token management proxy application 192 may further comprise an authentication token update component 196. The authentication token update component 196 may be generally arranged to receive update requests and update or set one or more authentication tokens associated with service accounts.

In one embodiment, the authentication token update component 196 may be configured to receive update requests to update or set authentication tokens for one or more service accounts. Each request may include at least the service account information (e.g., service account identifiers, service account UPN, etc.), the generated authentication token to update or set for a service account, and a portion of the proxy authentication information (e.g., the digital fingerprint or thumbprint of the shared secret digital certificate). In response to the received request to update the authentication token for a service account, the authentication token update component 196 may be configured authorize the received request based on the received portion of the proxy authentication information.

Once the request has been authorized, the authentication token update component 196 may be configured to identify the appropriate directory service server device managing the service account based at least partially on the directory service information (e.g., a directory service server device associated with a service account) contained in the service account information associated with the service account. It may be appreciated that the service account information including the directory service information may be provided by the authentication token management component 174 in the request.

Once a directory service server device has been identified, the authentication token update component 196 may be further configured to communicate via network interconnect 112 and one or more APIs of the directory service application (not shown) of the identified directory service server device to update or set the authentication token for the service account identified by the service account identifier or service account UPN with the received generated authentication token.

To ensure that the authentication tokens are unrecoverable in a usable form, in some embodiments, the identified directory service server device may store only a cryptographic one-way hash of the generated authentication token or a salted version of the generated authentication token so that even when the directory service server device is compromised, the original authentication tokens may not be recoverable by an attacker.

It may be appreciated that in implementations where an immutable authentication token is desired, the authentication token update component 196 may be further configured to communicate via network interconnect 112 and one or more APIs of the directory service application (not shown) of the identified directory service server device to update or set the received generated authentication token for a service account as an immutable authentication token (at least with respect to one or more service accounts) so that the one or more service accounts may not have the necessary access permission(s) to update the authentication tokens associated with the one or more service accounts.

In a non-limiting exemplary implementation of the above embodiments, the token management proxy application 192 may be implemented by a service account retrieval shell script (e.g., a MICROSOFT GetAccountsForUser.ps1 PowerShell script) and an authentication token update shell script (e.g., a MICROSOFT ResetPassword.ps1 PowerShell script) stored on the server device 190. Additionally, the service device 190 may also comprise a proxy account with access permissions configured to execute the service account retrieval shell script and the authentication token update shell script.

Continuing with the above non-limiting exemplary implementation and in response to a request to retrieve service accounts, the token management proxy application 192 may be configured to identify a proxy account based on received digital fingerprint or thumbprint of the shared digital certificate contained the proxy authentication information, which may be mapped to the shared secret digital certificate that is shared between the server device 190 and server device 170 and the shared secret digital certificate is further mapped to the proxy account. The token management proxy application 192 may then execute the service account retrieval shell script arranged to retrieve one or more service accounts from one or more directory server service devices 130-*l* with an input parameter of the client account identifier or client account UPN, and an execution policy based on the shared secret digital certificate and/or the identified proxy account.

Still continuing with the above non-limiting exemplary implementation and in response to a request to update or set an authentication token for a service account, the token management proxy application 192 may be configured to identify a proxy account in a similar manner discussed above with respect to the request to retrieve service accounts. The token management proxy application 192 may then execute authentication token update shell script arranged to update authentication token of service accounts associated with or managed by one or more directory server service devices 130-*l* with the input parameters of the service account identifier and the generated authentication token to update or set for the service account and an execution policy based on the shared secret digital certificate and/or the identified proxy account.

To further ensure the security of authentication tokens associated with one or more service accounts, in some embodiments, the token management proxy application 192 may be configured to comprise only the service account retrieval component 194 and the authentication token update component 196. Thus, in some non-limiting exemplary implementations of some embodiments, the proxy account of the server device 190 may also be configured to execute only the service account retrieval shell script and an authentication token update shell script. In this manner, a client may be limited to only being able to perform two different actions on the server device 190 and/or the token management proxy application 192.

By way of illustration, assume that the received client account information indicates that the client 102-2 has the name of "Ellen Adams" and client account UPN of "EllenAdams@contoso.com" and has previously requested for a service account to remotely debug the server device 140-1-1 with a requested lifetime of 4 hours. Additionally, in response to a request for a service account, the admin management application 114 provisioned a service account with a service account UPN of "EllenAdams_RemoteDebugger@domain136-1.contoso.com", service account role of a remote user and debugger and service account scope of breach boundary 138-1-1. Furthermore, in response to request to generate an authentication token for the above service account, the authentication token management component 176 generated an exemplary plaintext random password of "Xe2&a^%5".

Continuing with the above illustration and in response to a request from authentication token proxy component 178 to retrieve one or more service accounts associated with the client account UPN "EllenAdams@contoso.com", the service account retrieval component 194 may communicate via network interconnect 112 and one or more APIs of the directory service applications (not shown) of the directory service server devices 130-*l* to retrieve one or more service accounts associated with the client account UPN "EllenAdams@contoso.com" and provide service account information for the service account identified by service account UPN "EllenAdams_RemoteDebugger@domain136-1.contoso.com" to the authentication token proxy component 178.

Still continuing with the above illustration and in response to a request to update or set the authentication token with an exemplary plaintext random password of "Xe2&a^%5" for the service account identified by service account UPN "EllenAdams_RemoteDebugger@domain136-1.contoso.com", the authentication token update component 196 may identify the directory service server device 130-1 as the directory server service device associated with or managing the service account identified by the above service account UPN based on the directory service information contained in the service account information. Once the directory service server device 130-1 is identified, the authentication token update component 196 may communicate via network interconnect 112 and one or more APIs of the directory service application (not shown) of the directory service server device 130-1 to update or set the authentication token for the service account identified by the above service account UPN to the exemplary plaintext random password of "Xe2&a^%5", where the client 102-2 may later use the service account UPN "EllenAdams_RemoteDebugger@domain136-1.contoso.com" and the exemplary plaintext random password of "Xe2&a^%5" to access server device 140-1-1, 140-1-2, 140-1-3 in breach boundary 138-1-1.

At least one technical advantage that may be realized through the use of machine generated authentication tokens for one or more service account is that the machine generated authentication tokens may be substantially more complex compared to the human created passwords, traditional brute force and even some social engineering based attacks may be mitigated by the use of complex authentication tokens as these tokens may be difficult or even impossible to communicate accurately via ordinary means and/or mediums (e.g., verbal communication). Furthermore, by replacing all human created passwords with machine generated authentication tokens that are random and/or unique for some or even all service accounts in a datacenter, the attacker's ability to compromise the one or more service accounts by, for example, using a shared authentication token may be further mitigated. In embodiments where one or more service accounts may be further associated with a limited lifetime, the attacker's access using a compromised service account will be further limited because these service accounts may have a limited lifetime before they are disabled. In this manner, the security and privacy of the SaaS systems in a datacenter may be greatly improved.

Although the authentication token management system 100 shown in FIG. 1 has a limited number of elements in a certain topology, it may be appreciated that the Authentication token management system 100 may include more or less elements in alternate topologies as desired for a given implementation. Similarly, while various embodiments may illustrate the enterprise computing environment 150 encompassing the one or more client devices 104-*b*, server device 106, server device 108, server device 160, server device 170, server devices 130-*l*, and one or more forests 132-*k*, it may be appreciated that the at least some of the client and/or server devices may be external to the enterprise computing environment 150 for a given implementation. Furthermore, while various embodiments may also illustrate the datacenter 142 as encompassing the server device 190, server devices 130-*l*, and one or more forests 132-*k*, it may be appreciated that the datacenter 142 may further encompass the one or more client devices 104-*b*, server device 106, server device 108, server device 160, and server device 170 for some implementations.

**FIG. 2** illustrates an exemplary embodiment of a user interface view 200 for the authentication token management system 100. The client application 202 executing on one or more client devices 104-b may generate a user interface view 200 suitable for presentation on an electronic display of the one or more client devices 104-b. The user interface view 200 may also enable the clients 102-*a* (e.g., client 102-2) to interact with the authentication token management system 100. The client application 202 may be implemented as a standalone web application implemented in a web browser executing on the one or more electronic devices such as the client device 104-2 as illustrated in the user interface view 200. The web browser may include without limitation INTERNET EXPLORER®, MOZILLA®, FIREFOX®, SAFARI®, OPERA®, NETSCAPE NAVIGATOR®, and the like. The web browser may also support computer programming languages, standards, web protocols, and/or technologies required by the client application 202. Such computer programming languages, standards, web protocols, and/or technologies may include, but are not limited to, HTML, XHTML, XML, FLASH®/ActionScript, MACROMEDIA® FLASH®, JavaScript, ECMAScript, JScript, Basic, VISUAL BASIC®, VISUAL BASIC® Scripting Edition(VBScript), CSS, Asynchronous JavaScript and XML(AJAX), FLEX®, JAVA)®, Python, PERL®, C#/.net, and/or other suitable programming, scripting, or VM-based languages.

In various implementations, the web browser may generate the user interface view 200 including one or more graphical user interface (GUI) components based on information and executable computer program instructions provided by the authentication token management application 172 to the web browser. The web browser may include a language interpreter such as a script interpreter to interpret and execute the computer program instructions written in computer programming languages such as HTML, XHMTL, XML, AJAX, JAVASCRIPT®, FLASH®, VBScript, and/or other scripted programming languages to generate the user interface view 200.

The user interface view 200 of the client application 202 executing on the client device 104-2 may include, a web page 204 which may be presented to client 102-2 when the client device 104-2 accesses the authentication token management application 172 is successfully authenticated. The web page 204 may include client account information such as name associated with the client account (e.g., "Ellen Adams") and client account UPN (e.g., "EllenAdams@contoso.com") and an update accounts 206 button to enable the client 102-2 to request for latest service account information of the one or more service accounts associated with the client 102-2.

The user interface view 200 may also include a one or more of rows 212-*p,* and each row may include, but is not limited to, a service account identifier or service account UPN to identify the service account, service account roles indicating the one or more roles of the provisioned service account, service account scope indicating the scope of the provisioned service account, service account lifetime indicating the number of years, weeks, days, hours, minutes, and/or seconds remaining before the service account expires, and service account status indicating whether the service account is still active or has expired.

The user interface view 200 may also include one or more generate password 208-*o* buttons where each generate password button may be associated with a service account identifier or service account UPN. The client 102-2 may then use gesture 210 via an input device (e.g., touch input device, mouse input device, keyboard device, etc.) to select the generate password button to request to generate a plaintext random password for a service account identified by the service account identifier or service account UPN. To ensure security of the service accounts and/or the authentication tokens, it may be appreciated that the client application 202 may be configured to disable the generate password button (e.g., generate password button 208-2) for service accounts with an expired service account status. Additionally or alternatively, the client application 202 may be further configured to disable the generate password button for service accounts after a plaintext random password has already been generated for a service account with an active service account status so that a client that may have lost or forgotten the generated plaintext random password may be prevented from generating a new plaintext random password.

Included herein is a set of flow charts representative of exemplary methodologies for performing novel aspects of the disclosed architecture. While, for purposes of simplicity of explanation, the one or more methodologies shown herein, for example, in the form of a flow chart or flow diagram, are shown and described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be needed for a novel implementation.

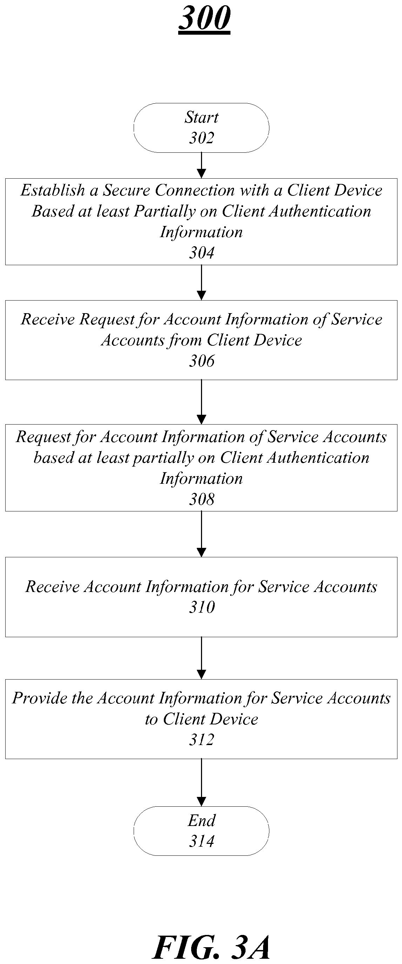

**FIG. 3A** illustrates one embodiment of a logic flow 300. The logic flow 300 may be representative of some or all of the operations executed by one or more embodiments described herein.

In the illustrated embodiment shown in FIG. 3A, the logic flow 300 may start at block 302 and may establish a secure connection with a client device based at least partially on client authentication information at block 304. For example, the authentication token management component 174 may authenticate client 102-2 based on a received security token issued by a trusted federated identity application 162 after the client 102-2 has authenticated to the client device 104-2 using a smart card comprising a digital smart card certificate and an associated PIN to establish a trusted connection. The authentication token management component 174 may further utilize one or more secure communication protocols (e.g., HTTPS) to establish a secure connection (i.e., a trusted and encrypted connection) with the client device 104-2.

The logic flow 300 may receive request for account information of service accounts from client device at block 306. For example, authentication token management component 174 may receive a request from client 102-2 via client device 104-2 for one or more service accounts associated with a client account of the client 102-2.

The logic flow 300 may request for account information of service accounts based at least partially on client authentication information at block 308. For example, in response to the received request from client device 104-2 for one or more service accounts associated with the client account of the client 102-2, the authentication token management component 174 may request via authentication token proxy component 178 service account information of one or more service accounts associated with the client account of the client 102-2 from the token management proxy application 192.

The logic flow 300 may receive account information for service accounts at block 310. For example, the authentication token management component 174 may receive service account information of one or more service accounts associated with the client account of the client 102-2 via authentication token proxy component 178, in response to the request for service account information of the one or more accounts.

The logic flow 300 provide the account information for service accounts to client device at block 312 and end at block 314. For example, the authentication token management component 174 may provide the received service account information of one or more service accounts associated with the client account of the client 102-2, in response to receiving the service account information from the token management proxy application 192. The embodiments are not limited to these examples.

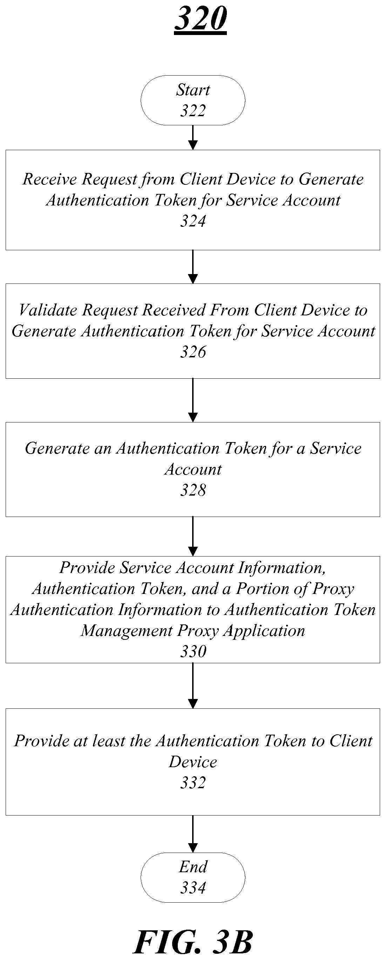

**FIG. 3B** illustrates one embodiment of a logic flow 320. The logic flow 320 may be representative of some or all of the operations executed by one or more embodiments described herein.

In the illustrated embodiment shown in FIG. 3B, the logic flow 320 may start at block 322 and may receive request from client device to generate authentication token for service account at block 324. For example, the authentication token management component 174 may receive a request from client device 104-2 to generate an authentication token for a service account associated with the client account of the client 102-2.

The logic flow 320 may validate request received from client device to generate authentication token for service account at block 326. For example, the authentication token management component 174 may validate the request received from client device to generate authentication token for service account by verifying that the received security token is issued by trusted STS provider, e.g., federated identity application 162, and that the client 102-2 requesting to generate authentication token has been authenticated based on two factor authentication (e.g., a smart card and an associated PIN).

The logic flow 320 may generate an authentication token for a service account at block 328. For example, authentication token generation component 176 may generate a plaintext random password based on a length parameter and a character class parameter.

The logic flow 320 may provide service account information, authentication token, and a portion of proxy authentication information to authentication token management proxy application at block 330. For example, authentication token generation component 176 may provide, via the authentication proxy component 178, service account information (e.g., the service account identifier or the service account UPN), the generated authentication token, and a digital fingerprint or thumbprint of a shared secret digital certificate to the token management proxy application 192 in order to update or set the generated authentication token for a service account identified by the service account information.

The logic flow 320 may provide at least the authentication token to client device at block 332 and end at block 334. For example, the authentication token notification component 180 may notify or provide at least the generated authentication token in a hidden div to the client 102-2 via client device 104-2 for storage in an authentication token datastore 166. The embodiments are not limited to these examples.

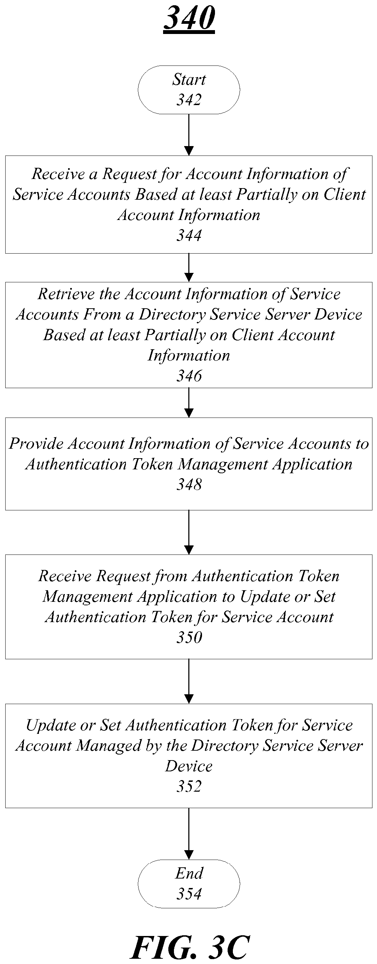

**FIG. 3C** illustrates one embodiment of a logic flow 340. The logic flow 340 may be representative of some or all of the operations executed by one or more embodiments described herein.

In the illustrated embodiment shown in FIG. 3C, the logic flow 340 may start at block 342 and may receive a request for account information of service accounts based at least partially on client account information at block 344. For example, the service account retrieval component 194 may receive a request for service account information of one or more service accounts associated with a client account identified by the client account identifier or client account UPN contained in the client account information. The request may include the client account information and a portion of the proxy authentication information.

The logic flow 340 may retrieve the account information of service accounts from a directory service server device based at least partially on client account Information at block 346. For example, the service account retrieval component 194 may communicate via one or more networks in the datacenter 142 and/or network interconnect 112 and one or more APIs of directory service applications of one or more directory service server devices 130-*l* to retrieve service account information associated with a client account identified by the client account identifier or client account UPN contained in the client account information.

The logic flow 340 may provide account information of service accounts to authentication token management application at block 348. For example, the service account retrieval component 194 provide the retrieved service account information of one or more service accounts associated with a client account of the client 102-2 identified by the client account identifier or client account UPN contained in the client account information.

The logic flow 340 may receive request from authentication token management application to update or set authentication token for service account at block 350. For example, authentication token update component 196 may receive a request to update or set the authentication token for a service account from the authentication token proxy component 178. The request may include, the service account information, the authentication token, and a portion of the proxy authentication information.

The logic flow 340 may update or set authentication token for service account managed by the directory service server device at block 352 and end at block 354. For example, authentication token update component 196 may update or set the authentication token with the received authentication token for a service account identified by a service account identifier or service account UPN contained in the service account information. The embodiments are not limited to these examples.

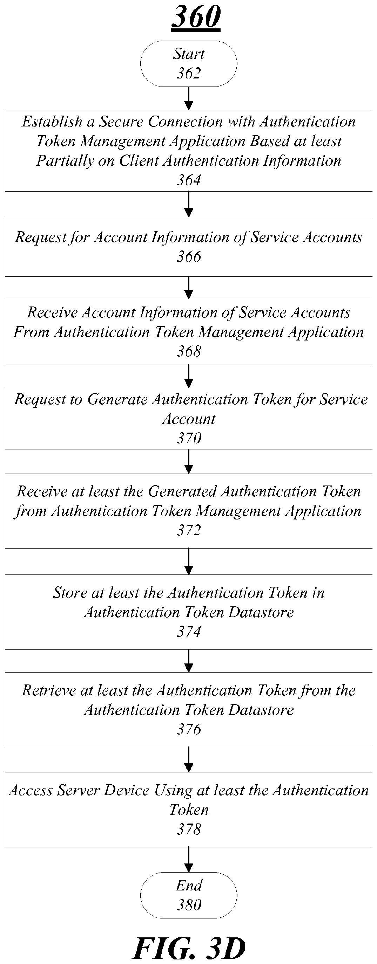

**FIG. 3D** illustrates one embodiment of a logic flow 360. The logic flow 360 may be representative of some or all of the operations executed by one or more embodiments described herein.

In the illustrated embodiment shown in FIG. 3D, the logic flow 360 may start at block 362 and may establish a secure connection with authentication token management application based at least partially on client authentication information at block 364. For example, the client device 104-2 may provide a security token to the authentication token management component 174, and the authentication token management component 174 may authenticate client 102-2 based on the security token issued by a trusted federated identity application 162 after the client 102-2 has authenticated to the client device 104-2 using a smart card comprising a digital smart card certificate and an associated PIN to establish a trusted connection. The client device 104-2 may also utilize one or more secure communication protocols (e.g., HTTPS) to establish a secure connection (i.e., a trusted and encrypted connection) with the authentication token management application 172.

The logic flow 360 may request for account information of service accounts at block 366. For example, the client device 104-2 may request for service account information for one or more service accounts associated with the client 102-2 having a client account identified by the client account identifier or client account UPN contained in the client account information.

The logic flow 360 may receive account information of service accounts from authentication token management application at block 368. For example, the client 102-2 via client device 104-2 may receive the service account information for one or more service accounts associated with the client account of the client 102-2, in response to the request for service account information.

The logic flow 360 may request to generate authentication token for service account at block 370. For example, the client device 104-2 may request to generate a plaintext random password for a service account identified by a service account identifier or service account UPN contained in the service account information.

The logic flow 360 may receive at least the generated authentication token from authentication token management application at block 372. For example, the client device 104-2 may receive at least the generated authentication token for a service account as a hidden element in a web page. Additionally, the client device 104-2 may also receive the service account identifier or service account UPN on the same web page.

The logic flow 360 may store at least the authentication token in authentication token datastore at block 374. For example, the client 102-2 via client device 104-2 may store received authentication token for a service account in an authentication token datastore 166. Exemplary authentication token datastore 166 may include, but is not limited to, Password Safe. Additionally, the client 102-2 via client device 104-2 may also store the service account identifier or service account UPN associated with the received authentication token in the authentication token datastore 166.

The logic flow 360 may retrieve at least the authentication token from the authentication token datastore at block 376. For example, the client 102-2 via client device 104-2 may retrieve at least the stored authentication token from the authentication token datastore 166. Additionally, the client 102-2 via client device 104-2 may also retrieve the service account identifier or service account UPN associated with the received authentication token from the authentication token datastore 166.

The logic flow 360 may access server device using at least the authentication token at block 378 and end at block 380. For example, the client 102-2 may then use the retrieved authentication token and the service account UPN to access server device 140-1-1 via client device 104-2 using, for example, remote desktop protocol. The embodiments are not limited to these examples.

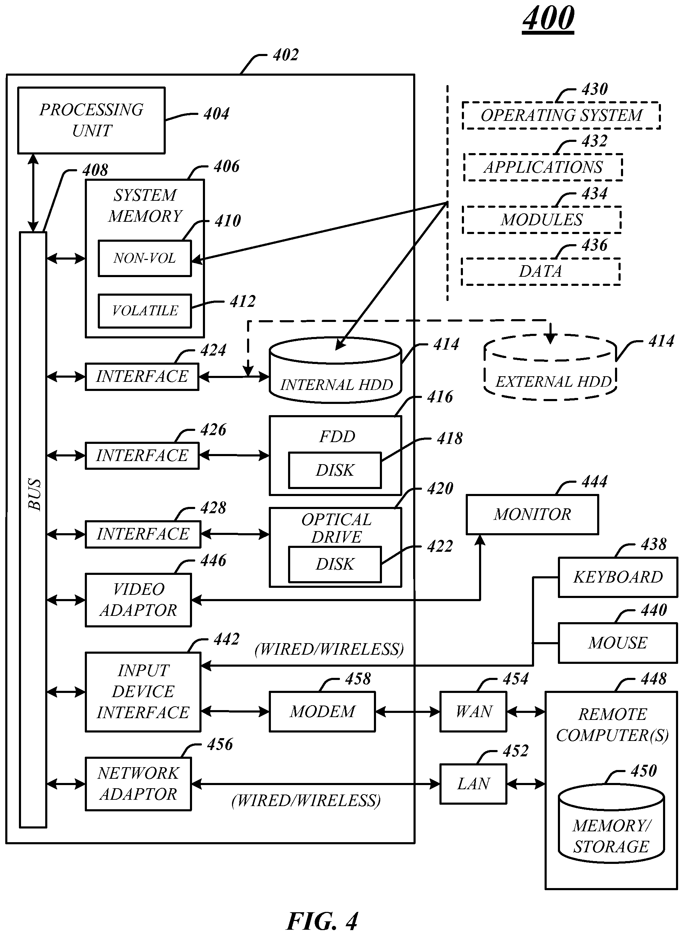

**FIG. 4** illustrates an embodiment of an exemplary computing architecture 400 suitable for implementing various embodiments as previously described. In one embodiment, the computing architecture 400 may comprise or be implemented as part of the client devices and/or server devices. The embodiments are not limited in this context.

As used in this application, the terms "system" and "component" are intended to refer to a computer-related entity, either hardware, a combination of hardware and software, software, or software in execution, examples of which are provided by the exemplary computing architecture 400. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 400 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 400.

As shown in FIG. 4, the computing architecture 400 comprises a processing unit 404, a system memory 406 and a system bus 408. The processing unit 404 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 404.

The system bus 408 provides an interface for system components including, but not limited to, the system memory 406 to the processing unit 404. The system bus 408 can be any of several types of bus structure that may further interconnect to a memory bus (with or without a memory controller), a peripheral bus, and a local bus using any of a variety of commercially available bus architectures. Interface adapters may connect to the system bus 408 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The computing architecture 400 may comprise or implement various articles of manufacture. An article of manufacture may comprise a computer-readable storage medium to store logic. Examples of a computer-readable storage medium may include any tangible media capable of storing electronic data, including volatile memory or non-volatile memory, removable or non-removable memory, erasable or non-erasable memory, writeable or re-writeable memory, and so forth. Examples of logic may include executable computer program instructions implemented using any suitable type of code, such as source code, compiled code, interpreted code, executable code, static code, dynamic code, object-oriented code, visual code, and the like. Embodiments may also be at least partly implemented as instructions contained in or on a non-transitory computer-readable medium, which may be read and executed by one or more processors to enable performance of the operations described herein.

The system memory 406 may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 4, the system memory 406 can include non-volatile memory 410 and/or volatile memory 412. A basic input/output system (BIOS) can be stored in the non-volatile memory 410.

The computer 402 may include various types of computer-readable storage media in the form of one or more lower speed memory units, including an internal (or external) hard disk drive (HDD) 414, a magnetic floppy disk drive (FDD) 416 to read from or write to a removable magnetic disk 418, and an optical disk drive 420 to read from or write to a removable optical disk 422 (e.g., a CD-ROM or DVD). The HDD 414, FDD 416 and optical disk drive 420 can be connected to the system bus 408 by a HDD interface 424, an FDD interface 426 and an optical drive interface 428, respectively. The HDD interface 424 for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units 410, 412, including an operating system 430, one or more application programs 432, other program modules 434, and program data 436. In one embodiment, the one or more application programs 432, other program modules 434, and program data 436 can include, for example, the various applications and/or components of the system 100.

A user can enter commands and information into the computer 402 through one or more wire/wireless input devices, for example, a keyboard 438 and a pointing device, such as a mouse 440. Other input devices may include microphones, infra-red (IR) remote controls, radio-frequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 404 through an input device interface 442 that is coupled to the system bus 408, but can be connected by other interfaces such as a parallel port, IEEE 1394 serial port, a game port, a USB port, an IR interface, and so forth.

A monitor 444 or other type of display device is also connected to the system bus 408 via an interface, such as a video adaptor 446. The monitor 444 may be internal or external to the computer 402. In addition to the monitor 444, a computer typically includes other peripheral output devices, such as speakers, printers, and so forth.

The computer 402 may operate in a networked environment using logical connections via wire and/or wireless communications to one or more remote computers, such as a remote computer 448. The remote computer 448 can be a workstation, a server computer, a router, a personal computer, portable computer, microprocessor-based entertainment appliance, a peer device or other common network node, and typically includes many or all of the elements described relative to the computer 402, although, for purposes of brevity, only a memory/storage device 450 is illustrated. The logical connections depicted include wire/wireless connectivity to a local area network (LAN) 452 and/or larger networks, for example, a wide area network (WAN) 454. Such LAN and WAN networking environments are commonplace in offices and companies, and facilitate enterprise-wide computer networks, such as intranets, all of which may connect to a global communications network, for example, the Internet.

When used in a LAN networking environment, the computer 402 is connected to the LAN 452 through a wire and/or wireless communication network interface or adaptor 456. The adaptor 456 can facilitate wire and/or wireless communications to the LAN 452, which may also include a wireless access point disposed thereon for communicating with the wireless functionality of the adaptor 456.

When used in a WAN networking environment, the computer 402 can include a modem 458, or is connected to a communications server on the WAN 454, or has other means for establishing communications over the WAN 454, such as by way of the Internet. The modem 458, which can be internal or external and a wire and/or wireless device, connects to the system bus 408 via the input device interface 442. In a networked environment, program modules depicted relative to the computer 402, or portions thereof, can be stored in the remote memory/storage device 450. It will be appreciated that the network connections shown are exemplary and other means of establishing a communications link between the computers can be used.

The computer 402 is operable to communicate with wire and wireless devices or entities using the IEEE 802 family of standards, such as wireless devices operatively disposed in wireless communication (e.g., IEEE 802.11 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.11x (a, b, g, n, etc.) to provide secure, reliable, fast wireless connectivity. A Wi-Fi network can be used to connect computers to each other, to the Internet, and to wire networks (which use IEEE 802.3-related media and functions).

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments need more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms 'first," "second," 'third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the scope of the appended claims.

## Claims

1. A computer-implemented method, comprising:
establishing a secure connection with a client device based at least partially on client authentication information associated with a first account of the client;
receiving a request for account information of one or more accounts associated with the first account of the client;
providing the account information for the one or more accounts associated with the first account to the client via the client device;
selecting a second account from the one or more provided accounts via the client device;
receiving a request to generate an authentication token for the second account;
validating the request to generate the authentication token based on the client authentication information associated with the client;
generating the authentication token for the second account;
providing at least the authentication token to the client via the client device over the secure connection for use by the client device; and
storing by the client device at least the authentication token in an authentication token datastore; and
logging into the second account with the stored authentification token.

2. The computer-implemented method of claim 1, further comprising:
requesting for the account information of the one or more accounts associated with the first account of the client by providing at least proxy authentication information to a token management proxy application configured to retrieve the account information of the one or more accounts managed by a directory service server device.

3. The computer-implemented method of claim 1, further comprising:
providing account information associated with the second account, the generated authentication token, and a portion of proxy authentication information to a token management proxy application configured to update the authentication token associated with the second account managed by a directory service server device.

4. At least one machine-readable storage medium comprising a plurality of instructions that in response to being executed on a computing device, cause the computing device to carry out the method according to any of claims 1 to 3.

5. An apparatus, comprising: a processor circuit; and a server application for execution by the processor circuit, the server application comprising a management component
to establish a secure connection with a client device based at least partially on client authentication information associated with a first account of the client;
receive a request for the account information of the one or more accounts associated with the first account of the client;
provide account information for one or more accounts associated with the first account to the client via the client device;
receive a request to generate an authentication token for a second account selected from the one or more accounts;
validate the request to generate the authentication token based on the client authentication information associated with the client; and
providing at least the authentication token to the client via the client device over the secure connection for use by the client device.

6. The apparatus of claim 5, wherein the server application further comprises:
a proxy component to request for account information of one or more accounts associated with the first account of the client by providing a portion of proxy authentication information to a token management proxy application configured to retrieve the account information of the one or more accounts managed by a directory service server device.

7. The apparatus of claim 6, wherein the proxy component is to further receive the account information for a second account associated with the first account from the token management proxy application in response to the request for the account information of the one or more accounts.

8. The apparatus of claim 5, wherein the server application further comprises a token generation component to generate the authentication token for the second account, and a notification component to provide the authentication token to the client via the client device over the secure connection for use by a client.

9. The apparatus of claim 6, wherein the proxy component is to further provide account information associated with the second account, the generated authentication token, and a portion of the proxy authentication information to a token management proxy application configured to update the authentication token associated with the second account managed by the directory service server device.

10. The apparatus of claim 5, wherein the client authentication information associated with the client account comprises a digital certificate and a personal identification number (PIN) associated with an identity token, and the authentication token is a plaintext random password generated based at least partially on a length parameter and a character class parameter.

11. The apparatus of claim 5, wherein the request to generate the authentication token is associated with token request information and the token request information comprises at least the account information for the second account.

12. At least one machine-readable storage medium comprising a plurality of instructions that, in response to being executed on a computing device, cause the computing device to realize an apparatus according to any of claims 5-11.

## Patentansprüche

1. Computerimplementiertes Verfahren, das umfasst:
Herstellen einer sicheren Verbindung mit einem Kundengerät wenigstens teilweise basierend auf Kundenauthentifizierungsinformationen, die mit einem ersten Konto des Kunden assoziiert sind,
Empfangen einer Anfrage für Kontoinformationen eines oder mehrerer Konten, die mit dem ersten Konto des Kunden assoziiert sind,
Vorsehen der Kontoinformationen für das eine oder die mehreren Konten, die mit dem ersten Konto assoziiert sind, zu dem Kunden über das Kundengerät,
Auswählen eines zweiten Kontos aus dem einen oder den mehreren vorgesehenen Konten über das Kundengerät,
Empfangen einer Anfrage für das Erzeugen eines Authentifizierungstokens für das zweite Konto,
Validieren der Anfrage für das Erzeugen des Authentifizierungstokens basierend auf den Kundenauthentifizierungsinformationen, die mit dem Kunden assoziiert sind,
Erzeugen des Authentifizierungstokens für das zweite Konto,
Vorsehen wenigstens des Authentifizierungstokens zu dem Kunden über das Kundengerät über die sichere Verbindung für die Verwendung durch das Kundengerät,
Speichern, durch das Kundengerät, wenigstens des Authentifizierungstokens in einem Authentifizierungstoken-Datenspeicher, und
Anmelden an dem zweiten Konto mit dem gespeicherten Authentifizierungstoken.

2. Computerimplementiertes Verfahren nach Anspruch 1, das weiterhin umfasst:
Anfragen der Kontoinformationen des einen oder der mehreren Konten, die mit dem ersten Konto des Kunden assoziiert sind, durch das Vorsehen wenigstens von Proxyauthentifizierungsinformationen zu einer Tokenverwaltungs-Proxyanwendung, die konfiguriert ist zum Abrufen der Kontoinformationen des einen oder der mehreren Konten, die durch eine Verzeichnisdienst-Servereinrichtung verwaltet werden.

3. Computerimplementiertes Verfahren nach Anspruch 1, das weiterhin umfasst:
Vorsehen von Kontoinformationen, die mit dem zweiten Konto assoziiert sind, des erzeugten Authentifizierungstokens und eines Teils von Proxyauthentifizierungsinformationen zu einer Tokenverwaltungs-Proxyanwendung, die konfiguriert ist zum Aktualisieren des mit dem zweiten Konto, das durch eine Verzeichnisdienst-Servereinrichtung verwaltet wird, assoziierten Authentifizierungstokens.

4. Wenigstens ein maschinenlesbares Speichermedium, das eine Vielzahl von Befehlen enthält, die bei einer Ausführung auf einem Computergerät veranlassen, dass das Computergerät ein Verfahren gemäß einem der Ansprüche 1 bis 3 durchführt.

5. Vorrichtung, die eine Prozessorschaltung und eine Serveranwendung für die Ausführung durch die Prozessorschaltung umfasst, wobei die Serveranwendung eine Verwaltungskomponente umfasst zum:
Herstellen einer sicheren Verbindung mit einem Kundengerät wenigstens teilweise basierend auf Kundenauthentifizierungsinformationen, die mit einem ersten Konto des Kunden assoziiert sind,
Empfangen einer Anfrage für Kontoinformationen eines oder mehrerer Konten, die mit dem ersten Konto des Kunden assoziiert sind,
Vorsehen der Kontoinformationen für das eine oder die mehreren Konten, die mit dem ersten Konto assoziiert sind, zu dem Kunden über das Kundengerät,
Empfangen einer Anfrage für das Erzeugen eines Authentifizierungstokens für ein zweites Konto, das aus dem einen oder den mehreren Konten ausgewählt wird,
Validieren der Anfrage für das Erzeugen des Authentifizierungstokens basierend auf den Kundenauthentifizierungsinformationen, die mit dem Kunden assoziiert sind, und
Vorsehen wenigstens des Authentifizierungstokens zu dem Kunden über das Kundengerät über die sichere Verbindung für die Verwendung durch das Kundengerät.

6. Vorrichtung nach Anspruch 5, wobei die Serveranwendung weiterhin umfasst:
eine Proxykomponente zum Anfragen von Kontoinformationen eines oder mehrerer Konten, die mit dem ersten Konto des Kunden assoziiert sind, durch das Vorsehen eines Teils von Proxyauthentifizierungsinformationen zu einer Tokenverwaltungs-Proxyanwendung, die konfiguriert ist zum Abrufen der Kontoinformationen des einen oder der mehreren Konten, die durch eine Verzeichnisdienst-Servereinrichtung verwaltet werden.

7. Vorrichtung nach Anspruch 6, wobei die Proxykomponente weiterhin dient zum Empfangen der Kontoinformationen für ein zweites Konto, das mit dem ersten Konto assoziiert ist, von der Tokenverwaltungs-Proxyanwendung in Reaktion auf die Anfrage für die Kontoinformationen des einen oder der mehreren Konten.

8. Vorrichtung nach Anspruch 5, wobei die Serveranwendung weiterhin eine Tokenerzeugungskomponente zum Erzeugen des Authentifizierungstokens für das zweite Konto umfasst, und
eine Benachrichtigungskomponente zum Vorsehen des Authentifizierungstokens zu dem Kunden über das Kundengerät über die sichere Verbindung für die Verwendung durch einen Kunden.

9. Vorrichtung nach Anspruch 6, wobei die Proxykomponente weiterhin dient zum Vorsehen von Kontoinformationen, die mit dem zweiten Konto assoziiert sind, des erzeugten Authentifizierungstokens und eines Teils der Proxyauthentifizierungsinformationen zu einer Tokenverwaltungs-Proxyanwendung, die konfiguriert ist zum Aktualisieren des mit dem zweiten Konto, das durch die Verzeichnisdienst-Servereinrichtung verwaltet wird, assoziierten Authentifizierungstokens.

10. Vorrichtung nach Anspruch 5, wobei die Kundenauthentifizierungsinformationen, die mit dem Kundenkonto assoziiert sind, ein digitales Zertifikat und eine persönliche Identifikationsnummer (PIN), die mit einem Identitätstoken assoziiert ist, umfassen und wobei das Authentifizierungstoken ein Klartext-Zufallspasswort ist, das wenigstens teilweise basierend auf einem Längenparameter und einem Zeichenklassenparameter erzeugt wird.

11. Vorrichtung nach Anspruch 5, wobei die Anfrage für das Erzeugen des Authentifizierungstokens mit Tokenanfrageinformationen assoziiert ist, und die Tokenanfrageinformationen wenigstens die Kontoinformationen für das zweite Konto umfassen.

12. Wenigstens ein maschinenlesbares Speichermedium, das eine Vielzahl von Befehlen enthält, die bei einer Ausführung auf einem Computergerät veranlassen, dass das Computergerät eine Vorrichtung gemäß einem der Ansprüche 5 bis 11 realisiert.

## Revendications

1. Procédé mis en oeuvre sur ordinateur comprenant :
l'établissement d'une connexion sécurisée avec un dispositif client sur la base au moins partielle d'informations d'authentification du client associées à un premier compte du client,
la réception d'une demande d'informations de comptes concernant un ou plusieurs comptes associés au premier compte du client,
la fourniture au client d'informations de comptes pour le ou les comptes associés au premier compte par l'intermédiaire du dispositif client,
la sélection d'un second compte à partir du ou des comptes fournis par l'intermédiaire du dispositif client,
la réception d'une demande de génération d'un jeton d'authentification pour le second compte,
la validation de la demande de génération du jeton d'authentification sur la base des informations d'authentification du client associées au client,
la génération du jeton d'authentification pour le second compte,
la fourniture au moins du jeton d'authentification au client par l'intermédiaire du dispositif client sur la connexion sécurisée en vue d'une utilisation par le dispositif client, et
le stockage par le dispositif client au moins du jeton d'authentification dans une mémoire de données de jetons d'authentification, et
la consignation dans le second compte avec le jeton authentification stocké.

2. Procédé mis en oeuvre sur ordinateur selon la revendication 1, comprenant en outre :
la demande des informations de comptes concernant le ou les comptes associés au premier compte du client en fournissant au moins des informations d'authentification de mandataire à une application mandataire de gestion de jetons configurée pour récupérer les informations de comptes concernant le ou les comptes gérés par un dispositif formant serveur de service de répertoire.

3. Procédé mis en oeuvre sur ordinateur selon la revendication 1, comprenant en outre :
la fourniture à une application mandataire de gestion de jetons d'informations de comptes associées au second compte, au jeton d'authentification généré et à une partie des informations d'authentification de mandataire, l'application étant configurée pour mettre à jour le jeton d'authentification associé au second compte géré par un dispositif formant serveur de service de répertoire

4. Support unique ou multiple de stockage pouvant être lu par machine comprenant une pluralité d'instructions qui, en réponse à leur exécution sur un dispositif de calcul, amènent le dispositif de calcul à exécuter le procédé conformément à l'une quelconque des revendications 1 à 3.

5. Appareil comprenant : un circuit processeur et un serveur d'applications en vue d'une exécution par le circuit processeur, le serveur d'applications comprenant un composant de gestion
pour établir une connexion sécurisée avec un dispositif client sur la base au moins partielle d'informations d'authentification du client associées à un premier compte du client,
pour recevoir une demande d'informations de comptes concernant un ou plusieurs comptes associés au premier compte du client,
pour fournir au client des informations de comptes pour le ou les comptes associés au premier compte par l'intermédiaire du dispositif client,
pour recevoir une demande de génération d'un jeton d'authentification pour un second compte sélectionné à partir du ou des comptes,
pour valider la demande de génération du jeton d'authentification sur la base des informations d'authentification du client associées au client, et
pour fournir au moins le jeton d'authentification au client par l'intermédiaire du dispositif client sur la connexion sécurisée en vue d'une utilisation par le dispositif client.

6. Appareil selon la revendication 5, dans lequel le serveur d'applications comprend en outre :
un composant mandataire permettant de demander des informations de comptes concernant un ou plusieurs comptes associés au premier compte du client en fournissant une partie d'informations d'authentification de mandataire à une application mandataire de gestion de jetons configurée pour récupérer les informations de comptes concernant le ou les comptes gérés par un dispositif formant serveur de service de répertoire.

7. Appareil selon la revendication 6, dans lequel le composant mandataire est destiné à recevoir de plus les informations de comptes concernant un second compte associé au premier compte à partir de l'application mandataire de gestion de jetons en réponse à la demande d'informations de comptes concernant le ou les comptes.

8. Appareil selon la revendication 5, dans lequel le serveur d'applications comprend en outre un composant de génération de jeton destiné à générer le jeton d'authentification pour le second compte, et
un composant de notification destiné à fournir le jeton d'authentification au client par l'intermédiaire du dispositif client sur la connexion sécurisée en vue d'une utilisation par un client.

9. Appareil selon la revendication 6, dans lequel le composant mandataire est destiné à fournir de plus à une application mandataire de gestion de jetons des informations de comptes associées au second compte, au jeton d'authentification générée et à une partie des informations d'authentification de mandataire, l'application étant configurée pour mettre à jour le jeton d'authentification associé au second compte géré par le dispositif formant serveur de service de répertoire.

10. Appareil selon la revendication 5, dans lequel les informations d'authentification client associées au compte client comprennent un certificat numérique et un numéro personnel d'identification (PIN) associé à un jeton d'identité, et le jeton d'authentification est un mot de passe aléatoire en texte clair généré sur la base au moins partielle d'un paramètre de longueur et d'un paramètre de classe de caractère.

11. Appareil selon la revendication 5, dans lequel la demande de génération du jeton authentification est associée aux informations de demande de jeton, et les informations de demande de jeton comprennent au moins les informations de comptes concernant le second compte.

12. Support unique ou multiple de stockage pouvant être lu par machine comprenant une pluralité d'instructions qui, en réponse à leur exécution sur un dispositif de calcul, amènent le dispositif de calcul à réaliser un appareil conforme à l'une quelconque des revendications 5 à 11.
